# EUROPEAN PATENT SPECIFICATION

(11) **EP 3 019 433 B1**
(45) Date of publication and mention of the grant of the patent: **27.02.2019**
(21) Application number: 13736533.4
(22) Date of filing: 08.07.2013
(51) Int. Cl.: F03D 13/10, B66C 1/10

(54) **ASSEMBLY AND METHOD FOR LIFTING LOADS**
ANORDNUNG UND VERFAHREN ZUM HEBEN VON LASTEN
ENSEMBLE ET PROCÉDÉ DE LEVAGE DE CHARGES

(43) Date of publication of application: 18.05.2016
(73) Proprietor: VSL International AG, 3014 Bern (CH)
(72) Inventor: HAYNES, Scott, Singapore 758047 (SG); RUSSELL, Guy, Singapore 758047 (SG); ALMEIDA, Romao, P-1000-304 Lisboa (PT); HAUK, Thorsten, 3097 Liebfeld (CH)
(74) Representative: BOVARD AG
(86) International application number: PCT/EP2013/064377
(87) International publication number: WO 2015/003733

(56) References cited:
- EP-A1- 2 368 834
- WO-A2-2012/155073
- WO-A2-2012/160446
- JP-A- 2006 207 502

## Description

### TECHNICAL FIELD

The present invention relates in a general way to the technical field of building of tall structures, in particular in cases when heavy elements are lifted to the top of these structures and/or lowered from any part of these structures to the ground. In a more specific way, the present invention relates to an assembly and a corresponding method for lifting loads onto tall structures and/or lowering loads from tall structures.

### BACKGROUND OF THE INVENTION

The recent years have seen an important increase in the number of tall structures built around the world. In the past decades, radio and television broadcasting towers have been the main structures of this type. However, the strong need for alternative (and renewable) sources of energy has recently resulted in an increased need for construction of wind-powered electrical generators, often called wind turbines.

Most wind turbines built currently are composed of a rotor (generally in the form similar to an airscrew) which is connected to the generator unit and which is positioned on the top of a tall tower. The generator unit, together with other components, such as gearbox, drive train, brakes, etc.) is embedded in a cover housing called nacelle. Some of the newest wind turbines also comprise a helicopter-hoisting platform on the top of the nacelle, allowing namely for service personnel and the necessary tools to be winched down to the wind turbine from a helicopter.

Generally, wind turbines are built by constructing the tower and then lifting and positioning the rotor and the nacelle on the top of it. To this end, the individual components of the tower and generator equipment have traditionally been lifted using conventional cranes and other similar devices.

However, parallel to the number of wind turbines all over the world, their dimensions have also increased constantly over the past decades. The biggest wind turbines so far have rated generation capacities of around 7.5 MW and a height of around 150 m to 200 m, but various companies have already reported their activities in development of wind turbines having capacities up to 10 MW.

These new wind turbines will likely require even higher towers and/or heavier generator units which are out of reach of conventional cranes.

Some new systems and methods for lifting loads which can be used for building the modern wind turbines have already been proposed, such as disclosed in JP2003207502 and WO2012/160446. However, the devices and systems proposed are generally complex, heavy, voluminous, and their assembling, disassembling and transportation are quite complicated. Most of these devices and systems are also very susceptible to wind loads during erection, i.e. erection can only proceed at no wind or very low wind speeds. This often implies a considerable loss of time during the building of the wind turbines.

Therefore, improved systems and methods for lifting heavy loads are needed for building high structures. The object of the present invention is therefore to overcome at least some of the problems identified above related to the lifting of heavy loads on to tall structures.

### SUMMARY OF THE INVENTION

According to a first aspect of the invention, there is provided an assembly for lifting and/or lowering a load element according to claim 1.

More specifically, according to a first aspect of the present invention, there is provided an assembly for lifting a load element from a base region of a construction to another region of the construction and/or for lowering the load element from said other region of the construction to the base region of the construction, the assembly comprising:
- a platform element for supporting the load element;
lifting means for lifting the platform element from the base region of the construction to said other region of the construction and/or for lowering the platform element from said other region of the construction to the base region of the construction;a shifting element arranged to be able to change its position with respect to the platform element in order to move the load element in said other region of the construction from a load lifting position on the platform element to a load installation position on the construction,wherein the lifting means are supported by an anchoring element able to be secured in the top region of the construction, and wherein, in the load installation position, the platform element is disposed at least partly below the top of the construction, the shifting element on the platform element is a C-shaped frame supported on the platform element, wherein the shifting element and the C-shaped frame are mounted on top of the platform element and that the C-shaped frame is composed of two substantially vertical beams which are connected by a substantially horizontal beam, configured in such a way that the load element is capable of being rotated from a flat position to an upright position.

According to a second aspect of the invention, there is provided a method for lifting a load element from a base region of a construction, in particular a tower of a wind turbine, to another region of the construction, comprising the following steps:
- providing an anchoring assembly at the top region of the construction;
- assembling a platform element for supporting the load element at the base region of the construction and engaging the platform element with the lifting cables;
- providing the load element to be lifted at the base region of the construction;
- loading the load element on the platform element and lifting the platform element with the load element to the load lifting position at said other region of the construction or lifting the platform element without the load element and loading the load element on the platform element after the platform element has reached the load lifting position at said other region of the construction;
- displacing the load element by means of a shifting element on the platform element wherein the platform element is disposed at least partly below the top of the construction, the shifting element on the platform element is a C-shaped frame supported on the platform element, wherein the shifting element and the C-shaped frame are mounted on top of the platform element and that the C-shaped frame is composed of two substantially vertical beams which are connected by a substantially horizontal beam;
- rotating the load element from a flat position to an upright position;
- loading the load element on its position on the construction; and
- lowering the platform element to the base region of the construction.

In any case, it shall be noted that the lifting of various load elements can be done simultaneously or separately one after the other. Also, it shall be noted that the present invention also relates to the method for lowering a load element from any region of the construction to the base region of the construction, for example in case of replacing elements of the wind turbine or dismantling a tower.

The proposed assembly and method offer a new and innovative solution for lifting loads to an elevated region on any tall structure (or for lowering loads from such structures). The proposed assembly is light and simple, and has only a small number of elements compared with similar devices. The assembling, the disassembling and the transport (relocation) of the lifting assembly according to the present invention are very quick, and thus a quick turnaround time can be achieved. Moreover, the lifting and/or lowering assembly according to the present invention allows for lifting and/or lowering of several elements simultaneously. Thus, the whole installation process of these heavy loads can be done more quickly than by using alternative lifting devices. Furthermore, the proposed assembly can be used to build the tower itself, and it is also applicable in situations where traditional lifting devices cannot be used in a satisfactory manner due to adverse weather conditions, in particular strong winds.

Other aspects of the invention are recited in the dependent claims attached hereto and in the description.

### BRIEF DESCRIPTION OF THE DRAWINGS

Other features and advantages of the invention will become apparent from the following description of non-limiting exemplary embodiments (in which a wind turbine is represented, although the present invention also applies to all tall structures), with reference to the appended drawings, in which:
- Figure 1 is a perspective view of the top region of a wind turbine tower prior to the step of lifting a rotor and a nacelle;
- Figure 2 is a perspective view of the base region of the wind turbine tower of Figure 1 with a platform element according to a first embodiment of the present invention, prior to starting the lifting process;
- Figure 3 is a perspective view of the wind turbine tower and the lifting device according to the first embodiment of the present invention in an intermediate position during the lifting procedure;
- Figure 4 is a perspective view of the top region of the wind turbine tower and the platform element according to the first embodiment of the present invention in the load installation position showing the process of putting the nacelle in position;
- Figure 5 is a perspective view of the top region of the wind turbine tower and the platform element according to the first embodiment of the present invention in the load installation position showing the process of putting the rotor in position;
- Figure 6 is a perspective view of the wind turbine tower and the platform element according to the first embodiment of the present invention in an intermediate position during the lowering procedure;
- Figure 7 is a perspective view of the top region of another wind turbine tower according to a second embodiment of the present invention prior to the step of lifting a rotor and a nacelle;
- Figure 8 is a perspective view of the base region of the wind turbine tower of Figure 7 with a platform element according to a second embodiment of the present invention, prior to starting the lifting process;
- Figure 9 is a perspective view of the top region of the wind turbine tower and the platform element according to the second embodiment of the present invention in the load installation position showing the process of putting the nacelle in position;
- Figure 10 is a perspective view of the top region of the wind turbine tower and the platform element according to the second embodiment of the present invention in the load installation position showing the process of putting the rotor and nacelle in position;
- Figure 11 is a perspective view of the wind turbine tower and the platform element according to the second embodiment of the present invention in an intermediate position during the lowering procedure;
- Figure 12 is a perspective view of the base region of the wind turbine tower of Figure 1 with a platform element according to a third embodiment of the present invention, prior to starting the lifting process;
- Figure 13 is a perspective view of the wind turbine tower and the platform element according to the third embodiment of the present invention in an intermediate position during the lifting procedure;
- Figure 14 is a perspective view of the top region of the wind turbine tower and the platform element according to the third embodiment of the present invention showing the process of putting the assembly nacelle-rotor in position;
- Figure 15 is a perspective view of the top region of the wind turbine tower and the platform element according to the third embodiment of the present invention after the assembly nacelle-rotor has been put in position;
- Figure 16 is a perspective view of the base region of the wind turbine tower of Figure 1 with a platform element according to a fourth embodiment of the present invention, prior to starting the lifting process;
- Figure 17 is a perspective view of the wind turbine tower and the platform element according to the fourth embodiment of the present invention in an intermediate position during the lifting procedure;
- Figure 18 is a perspective view of the top region of the wind turbine tower and the platform element according to the fourth embodiment of the present invention after the platform element has reached the top of the tower;
- Figure 19 is a perspective view of the top region of the wind turbine tower and the platform element according to the fourth embodiment of the present invention showing the process of putting the assembly nacelle-rotor in position;
- Figure 20 is a perspective view of the top region of the wind turbine tower and the platform element according to the fourth embodiment of the present invention showing the process of putting the third blade of the rotor in position;
- Figure 21 is a perspective view of the base region of a wind turbine tower positioned on a off-shore platform with a platform element according to a fifth embodiment of the present invention, prior to starting the lifting process;
- Figure 22 is a perspective view of the off-shore platform with the platform element according to the fifth embodiment of the present invention during the loading of the load elements;
- Figures 23 and 24 are perspective views of the wind turbine tower and the platform element according to the fifth embodiment of the present invention in an intermediate position during the lifting procedure
- Figures 25A and 25B are views from the side of the top region of the wind turbine tower and the platform element according to the fifth embodiment of the present invention illustrating the lateral displacement of the load element on the top of the platform element;
- Figure 26 is a view from the side of the top region of the wind turbine tower and the platform element according to the fifth embodiment of the present invention in the stage prior to lowering the platform element;
- Figure 27 is a perspective view of the base region of the partially assembled tower with a platform element according to a sixth embodiment of the present invention, prior to starting the lifting process;
- Figure 28 is a perspective view of the tower with the platform element according to the sixth embodiment of the present invention being in the load installation position and prior to loading a tower segment to the platform element;
- Figure 29 is a perspective view of the top region of the tower and the platform element according to the sixth embodiment of the present invention in the load installation position before the lifted tower segment is put in position;
- Figure 30 is a perspective view of the top region of the tower and the platform element according to the sixth embodiment of the present invention showing the process of putting one tower segment in position;
- Figure 31 is a perspective view of the top region of the tower and the platform element according to the sixth embodiment of the present invention showing the process of disengaging the platform element from the tower and lifting the platform element to the next segment of the tower;
- Figure 32 is a perspective view of the top region of the tower and the platform element according to the sixth embodiment of the present invention showing the process of anchoring the platform element at the new top of the tower;
- Figure 33 is a perspective view of the tower and the platform element according to the sixth embodiment of the present invention in a position prior to loading the next tower segment on the platform element;
- Figure 34 is a perspective view of the base region of the partially assembled tower with a platform element according to a seventh embodiment of the present invention, with two additional tower segments being ready for lifting;
- Figure 35 is a perspective view of the top region of the tower with the bracket assembly installed;
- Figures 36 and 37 are perspective views of the top region of the tower and the platform element according to the seventh embodiment of the present invention showing the process of putting one tower segment in position and loading this tower segment on the top of the partially erected tower;
- Figure 38 is a perspective view of the top region of the tower, showing the step of connecting the platform element according to the seventh embodiment of the present invention to the bracket assembly at the new top of the tower;
- Figures 39, 40 and 41 are perspective views of the top region of the tower and the platform element according to the seventh embodiment of the present invention showing the process of putting the second tower segment in position and loading this second tower segment on the top of the partially erected tower; and
- Figures 42 and 43 are perspective views of the platform element according to the seventh embodiment of the present invention in the process of dismantling and lowering.

### DETAILED DESCRIPTION OF EMBODIMENTS OF THE INVENTION

Some embodiments of the present invention will be described in the following in more detail with reference to the attached figures. Identical functional and structural elements which appear in the different drawings are assigned the same reference numerals. For the sake of easiness, specific reference numerals in various Figures are given only to those functional and structural elements which are necessary for a good comprehension of the drawing. However, their omission in the particular Figure does not automatically imply that they are not present.

Also, although different embodiments are described in detail with respect to erecting a wind turbine, i.e. a construction comprising a tower with the rotor and the nacelle on the top, this specific description is not to be understood in a limiting way whatsoever since the present invention applies to all tall structures and constructions. Also, although the different embodiments of the present invention are described in detail using the method for lifting loads, it is to be understood that the corresponding methods for lowering loads to the base region of the construction are equally part of the present invention.

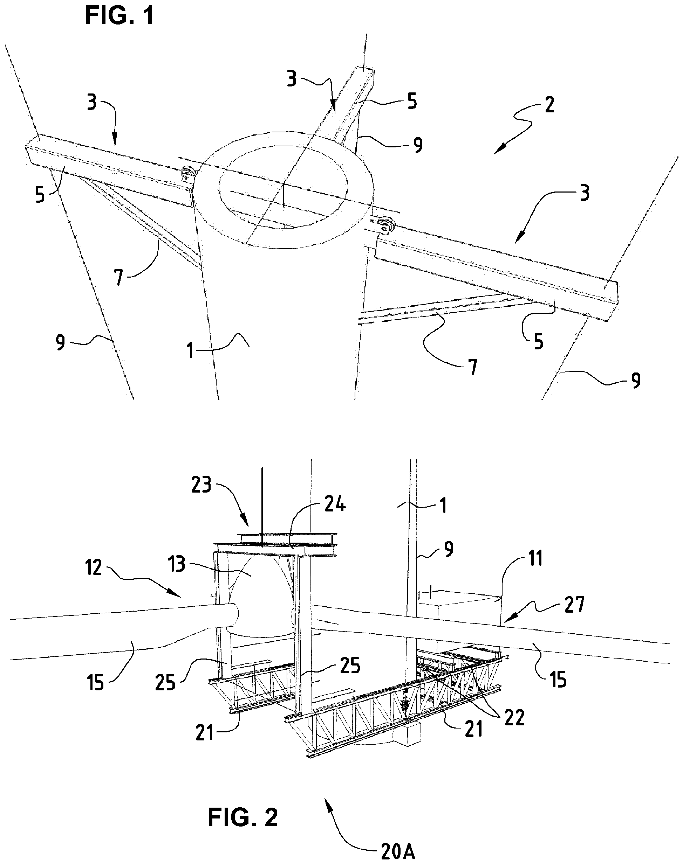

Figure 1 shows in a perspective view the top region of a wind-turbine tower 1 to which a rotor and a nacelle are to be lifted and installed. As can be seen in Figure 1, a bracket assembly 2 has been mounted to the top region of the tower 1.

The bracket assembly 2 comprises three bracket elements 3. However, the bracket assembly 2 could also comprise another number of bracket elements 3. Each of these bracket elements has one load bearing part 5 in the form of a beam, which extends outward from the tower 1 at an angle of about 90 degrees with respect to the surface of the tower 1. However, the load bearing parts 5 of the bracket elements 3 can also be arranged at another angle with respect to the surface of the tower 1.

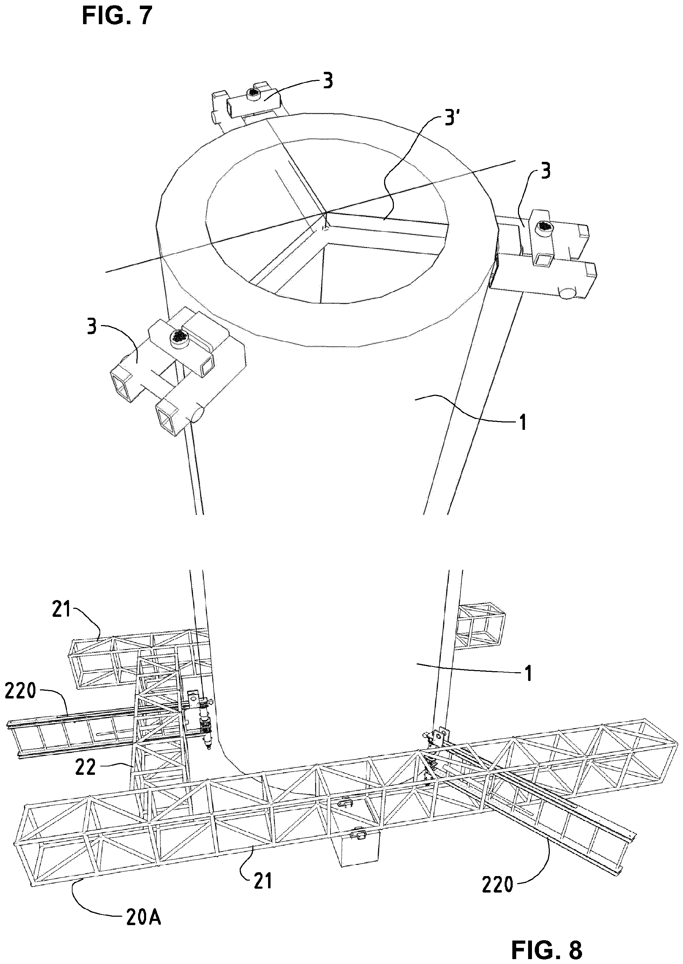

Each one of the load bearing parts 5 in the bracket assembly 2 of Figure 1 is supported by a support strut 7 extending from the load bearing parts 5 to the surface of the tower 1 in order to strengthen the bracket elements 3. As can be seen in Figure 1, the support struts 7 between the load bearing parts 5 and the surface of the tower 1 are positioned at an oblique angle, but another arrangement of the support struts 7 is generally also possible. However, bracket elements 3 without any support struts (i.e. with a cantilever structure) are also possible, for example as visible in Figure 7.

Lifting cables 9 hang vertically downward from each one of the load bearing parts 5. However, another arrangement of the angle of these cables 9 is generally also possible, in particular with lifting cables 9 arranged parallel to the tower 1, at any other position between that parallel position and the vertical position or beyond vertical. These lifting cables 9 generally extend to the base region of the tower 1. The lifting cables 9 may or may not be connected to the tower foundation. The term "cable" as used here refers generally to any strong, elongated element such as a rope, wire, strand, strip, bar or bundle of those elements.

This bracket assembly 2 can be made self-climbing or lifted to the top region of the tower 1 by means of a conventional crane. Also, the bracket assembly 2 can be pre-installed on a tower or a tower segment (for example as represented in connection with some embodiments of the present invention). If the bracket assembly 2 is designed to be self-climbing then it can be lifted to the top region of the tower 1 by using self-crawling jacks or any other appropriate self-climbing method. Otherwise, lifting cables (other than lifting cables 9) hanging from attachment points in the top region of the tower 1 can be used in a conventional way to lift the bracket assembly 2 to the top region of the tower 1.

The load bearing parts 5 of the bracket assembly 2 are designed in such a way that they can support the weight of heavy loads during the load-lifting stage and at any time during the installation procedure. For this reason, it is preferable that the load bearing parts 5 are adequately secured to the top of the tower 1 so that the vertical load forces of the weight of the load are transferred to the tower 1. Connection of the bracket assembly 2 to the tower 1 can be secured e.g. with a pin system or similar that can go through the tower 1. Each bracket element 3 can be connected to the tower 1 by one or more connection points.

Figure 2 is a perspective view of the base region of the wind-turbine tower 1 of Figure 1 with a platform element 20A of the assembly 20 according to a first embodiment of the present invention and with the nacelle 11 and the rotor 12 being put into place for being lifted to the top of the tower 1.

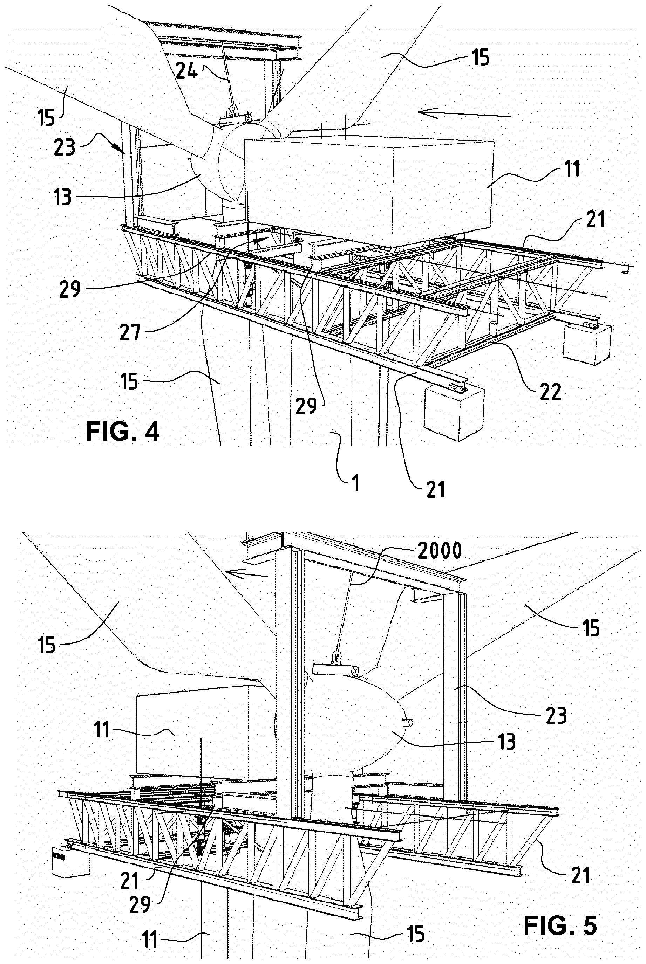

As can be seen in Figure 2, the platform element 20A has the form of a frame and it has been assembled at the base of the tower 1. This platform element 20A (and the whole assembly 20) are generally made of steel, but any other suitable materials can also be used. A shifting element 27 (better represented e.g. in Figure 4) and C-shaped frame 23 are mounted onto the top of the platform element 20A in Figure 2. The platform element 20A of the assembly 20 is a frame structure comprising two longer strap elements 21 connected by two other shorter strap elements 22. One of the shorter strap elements 22 connects two extremities of the longer strap elements 21, while the other one of the shorter strap elements 22 is disposed at a certain distance between the first shorter strap element 22 and the centre point of both the longer strap elements 22. Of course, the exact positions and total number of the shorter strap elements 22 can be varied without departing from the spirit of the present invention.

The platform element 20A of the assembly 20 is positioned around the base of the tower 1 such that the two longer strap elements 21 are disposed on different sides of the tower 1. Once installed at this position, the platform element 20A is connected to the lifting cables 9 which hang from the load bearing parts 5 of the bracket assembly 2.

The C-shaped frame 23 on the top of the platform element 20A in Figure 2 is composed of two substantially vertical solid beams 25, which are connected by a substantially horizontal solid beam 24. Of course, other structures for the C-shaped frame 23 are also imaginable.

Coming back to Figure 2, it can be seen that the nacelle 11 and the rotor 12 have been brought into position for being lifted to the top of the tower 1 by means of the platform element 20A. The rotor 12 of the wind turbine is composed of three blades 15 (one blade not being visible in this perspective view) and the hub 13. The nacelle 11 generally comprises a generator unit but also any other necessary equipment. Both the nacelle 11 and the rotor 12 are pre-assembled prior to the lifting operation.

The nacelle 11 is placed on the top of the shifting element 27 on the platform element 20A. To this end, a conventional crane or any other appropriate method can be used. The nacelle 11 can be secured to the shifting element 27 and/or directly to the platform element 20A, if necessary. On the other hand, the rotor
12 is positioned with blades extending parallel to the ground and suitably attached to the C-shaped frame 23, for example using attachment cables 24 (nicely visible in Figure 4). In this position, the rotor 12 and the nacelle 11 are ready for lifting to the top region of the tower 1.

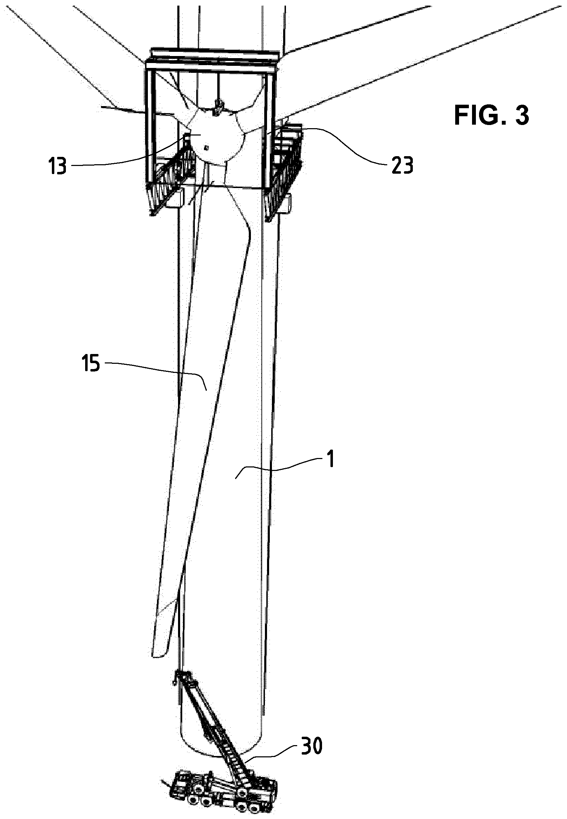

Figure 3 represents an intermediate position of the platform element 20A on the way to the top region of the tower 1. After the rotor 12 and the nacelle 11 have been positioned on the platform element 20A as described with reference to Figure 2, the whole platform element 20A together with the rotor 12 and the nacelle 11 is lifted in any appropriate way using the lifting cables 9. In particular, winches and similar devices can be used, but a skilled person will readily understand that any other appropriate lifting apparatus and/or method can also be used. The lifting speed can be variable, and can generally be around 40 m/hour. However, it would also be possible to use higher lifting speeds, reaching even up to around 100 m/hour.

During the lifting operation of the platform element 20A, the rotor 12, which is attached to the C-shaped frame 23, needs to be rotated from a flat position (i.e. substantially parallel to the ground) to an upright position. In a general case, the rotor 12 will be suspended on the C-shaped frame 23 on cables 24 such that the rotor 12 will automatically be urged to adopt the upright position under the influence of gravity. However, a service crane 30 or a similar device can also be used to assist with the adjustment of the orientation of the rotor 12 and to support the blade 15. The position adjustment is completed after the rotor 12 has reached the full upright position (i.e. perpendicular to the ground).

The platform element 20A can comprise one or more counterweights (not represented). These counterweights can be displaced with respect to the platform element 20A using any appropriate method. These counterweights can be used in a suitable way to ensure a predetermined position of the centre of gravity of the whole assembly 20 (i.e. the platform element 20A, the nacelle 11 and the rotor 12) relative to the centre of the tower during the lifting operation.

After the platform element 20A with the nacelle 11 and the rotor 12 mounted thereon has reached the top region of the tower 1, the lifting operation can be stopped. The bracket assembly 2 can be used for securing and anchoring the platform element 20A in this position. Of course, other anchoring and securing methods could also be used. Also, it would be possible not to use any anchoring or securing methods at this time and to let the platform element 20A hang on the lifting cables 9 during the whole lifting and lowering procedure. An important characteristic of the assembly and method according to this first embodiment of the present invention, which however applies to all other embodiments, is the fact that the platform element 20A in the load installing position is positioned such that the platform element 20A is disposed at least partly below the top of the tower 1, and more specifically in a way which makes it possible to move easily the load elements (e.g. the rotor 12 and the nacelle 11, but also the individual segments 1A or 1B of the tower itself) on the top of the platform element 20A in order to reach their final position on the top of the tower 1.

Both the shifting element 27 and the C-shaped frame 23 can be shifted (i.e. moved by sliding, rolling, or in any other appropriate way) in the horizontal direction on the top of the platform element 20A, in general in the direction parallel to the two longer strap elements 21. However, a transverse movement, i.e. movement perpendicular to the longer strap elements 21 of the platform element 20A, can also be possible. To this end, any suitable movement means can be used, for example hydraulic jacks. Once in position on the top of the tower 1, the shifting element 27 with the nacelle 11 can be shifted towards the tower 1 until reaching its predetermined final position. It is also possible to use adjustment jacks 29 for fine-tuning in order to achieve the correct position of the nacelle 11, both horizontally and vertically. Then, the nacelle 11 is moved from the shifting element 27 to the top of the tower 1 as represented by the arrow in Figure 4.

At all stages of the lifting and/or installation process, counterweights of the platform element 20A may need to be adjusted in order to maintain the centre of gravity substantially unchanged or at any predetermined position. Of course, other means for guaranteeing that the centre of gravity will remain at the desired position can also be used, in particular a tie-down, means for offsetting the rotor and/or the nacelle sledge and similar.

In the next step of the lifting method, represented in Figure 5, the rotor 12 is put into place. To this end, the C-shaped frame 23 with the rotor 12 is also moved towards the centre of the platform element 20A (i.e. towards the tower 1). This movement is represented by an arrow in Figure 4. In order to achieve the correct position of the rotor 12, and in particular in order to align the rotor 12 with the nacelle 11, it is possible here to use one or more adjustment jacks 2000 for fine-tuning, prior to mounting the rotor 12 on the nacelle 11. The lifting jacks of the platform element 20A can also be used in order to fine-tune the position of the nacelle 11 and the rotor 12. Once more, counterweights can be adjusted in order to keep the centre of gravity of the lifting device 20 either substantially unchanged or at a predetermined position.

Once the rotor 12 and the nacelle 11 are in their final position, both the C-shaped frame 23 and the nacelle support shifting element 27 can be moved back to their initial position with respect to the platform element 20A, in order to clear the wind turbine. If appropriate, the platform element 20A can be disconnected from the bracket assembly 2 and reconnected to the lifting cables 9.

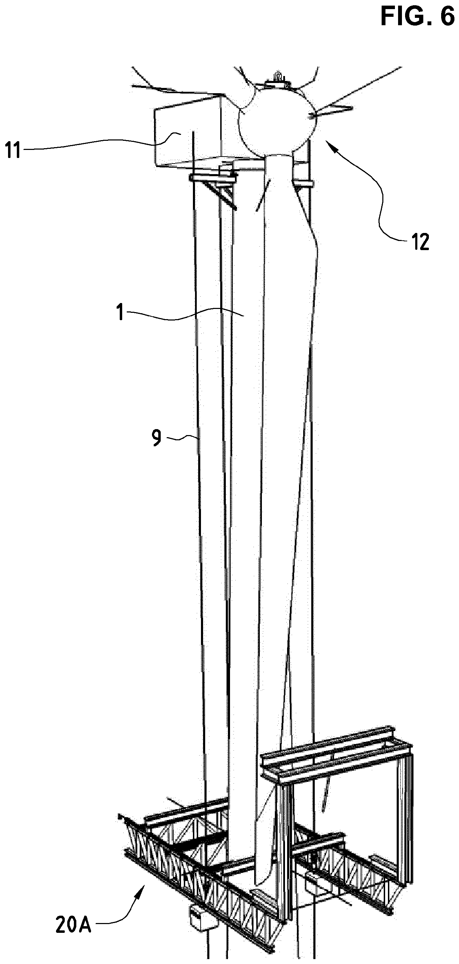

The last step of the lifting method according to an embodiment of the present invention is represented in Figure 6. The platform element 20A (without the rotor 12 and the nacelle 11) is lowered to the base of the tower 1 in the way opposite to the lifting operation. During the lowering process, the position of the shifting element 27 may need to be adjusted in order to clear the wind turbine tower 1 and/or rotor blades 15. Once the platform element 20A has been completely lowered, it can be disconnected from lifting cables 9 and dismantled. The elements of the platform element 20A can then be transported to the next tower, reassembled and used in the same way for lifting other loads (e.g. rotors and nacelles of other towers).

A second embodiment of the assembly and method according to the present invention is represented in Figures 7 to 11.

Basically, this second embodiment of the assembly 20 and of its platform element 20A is quite similar to the first embodiment described above. In particular, this second embodiment also relies on the bracket assembly 2, similar to the one represented in Figure 1. However, the bracket assembly 2 in this second embodiment of the present invention makes use of bracket elements 3 with corresponding load bearing parts which are not supported with any support struts but which have a cantilever structure. To this end, the bracket elements 3 may be interconnected by means of internal struts 3', but any other fastening and supporting means are imaginable. Also, the assembly according to this second embodiment of the present invention would also be possible with a bracket assembly 2 as illustrated in Figure 1.

As can be seen in Figure 8, the second embodiment of the platform element 20A is also based on an element which has the form of a frame, similar to the platform element 20A of the first embodiment of the present invention. In the particular embodiment in Figure 8, the platform element 20A comprises two longer strap elements 21 placed on both sides of the tower 1 which are connected by one shorter strap element 22. As mentioned in connection with the first embodiment of the present invention, the number and position of strap elements 21, 22 can change, without departing whatsoever from the spirit of the present invention.

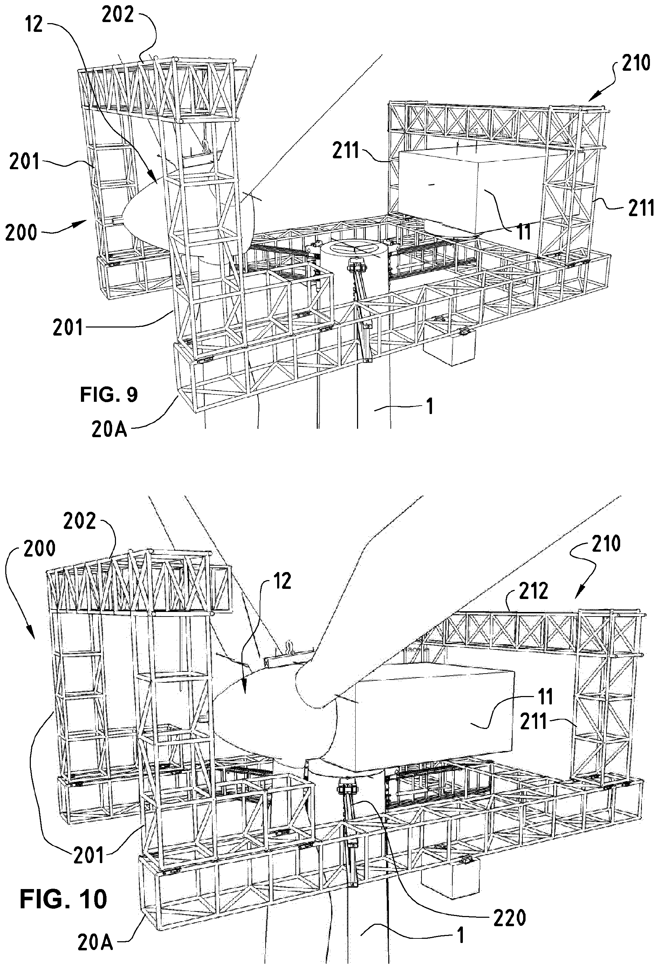

The platform element 20A according to this second embodiment of the invention, in a way similar to the platform element 20A of the first embodiment, also comprises a C-shaped frame 200, as can be seen in Figure 9. This C-shaped frame 200 on the top of the platform element 20A is similar to the C-shaped element 23 of the first embodiment, and it is also composed by two substantially vertical elements 201 (themselves similar in structure with the strap elements 21, 22) which are connected by a substantially horizontal strap element 202. Of course, other structures for the C-shaped frame 200, and in particular a construction using solid beams like in the first embodiment of the present invention, are also imaginable. Moreover, the platform element 20A according to the second embodiment of the present invention comprises a portal frame 210, which is also composed of two substantially vertical elements 211 connected with a substantially horizontal element 212.

Given a slightly different structure of the platform element 20A according to the second embodiment of the present invention, the lifting method using this assembly 20 of the second embodiment also differs from the lifting method adapted to the assembly 20 according to the first embodiment of the present invention, as described in the following:
After the platform element 20A has been assembled in the base region of the tower 1, it is connected to lifting cables 9 attached to the bracket elements 3 of the bracket assembly 2 in the top region of the tower 1. Then, the nacelle 11 is placed onto the portal frame 210 on the platform element 20A. In a next step, the rotor 12 of the wind turbine is fully assembled on the ground and mounted to the C-shaped frame 200 on the platform element 20A. These elements can be lifted and assembled onto the platform element 20A using any suitable method and sequence.

The platform element 20A with the rotor 12 and the nacelle 11 placed thereon is then lifted using the lifting cables 9. During the lifting operation of the platform element 20A, the rotor 12 needs to be rotated from a flat position (i.e. substantially parallel to the ground) to an upright position. In a general case, a blade 15 of the rotor 12 will be suspended on cables such that the blade 15 will automatically be urged to adopt the upright position under the influence of gravity. However, a service crane or a similar device can also be used to assist with the adjustment of the orientation of the blade 15 and the rotor 12. The position adjustment is completed after the blade 15 has reached the full upright position (i.e. substantially perpendicular to the ground).

After the platform element 20A has reached the top region of the tower 1, as can be seen in Figure 9, the lifting operation can be stopped for allowing the installing of the nacelle 11 and the rotor 12 in their final position. Also with the second embodiment of the lifting device 20 of the present invention, the bracket assembly 2 can be used for securing and anchoring the platform element 20A in this position, but other methods can be also used. In particular, support arms 220 (which are telescopic) can be used for securing the platform element 20A since they can adapt to different tower shapes (e.g. an oval or a rectangular shape).

In the next step, the portal frame 210 with the nacelle 11 positioned thereon is moved towards the tower 1 (as represented by the arrow in Figure 9) until the nacelle 11 reaches its final position, represented in Figure 10. Adjustment jacks (similar to those in the first embodiment) can be used for fine-tuning in order to achieve the correct position of the nacelle 11. Lifting jacks of the platform element 20A can also be used in order to fine-tune the position of the nacelle 11 and the rotor 12. Then, the nacelle 11 is loaded onto the top of the tower 1. In the next step, the rotor 12 is moved and positioned in the same manner using the C-shaped frame 200, and it is eventually connected to the nacelle 11 to form a complete wind turbine structure.

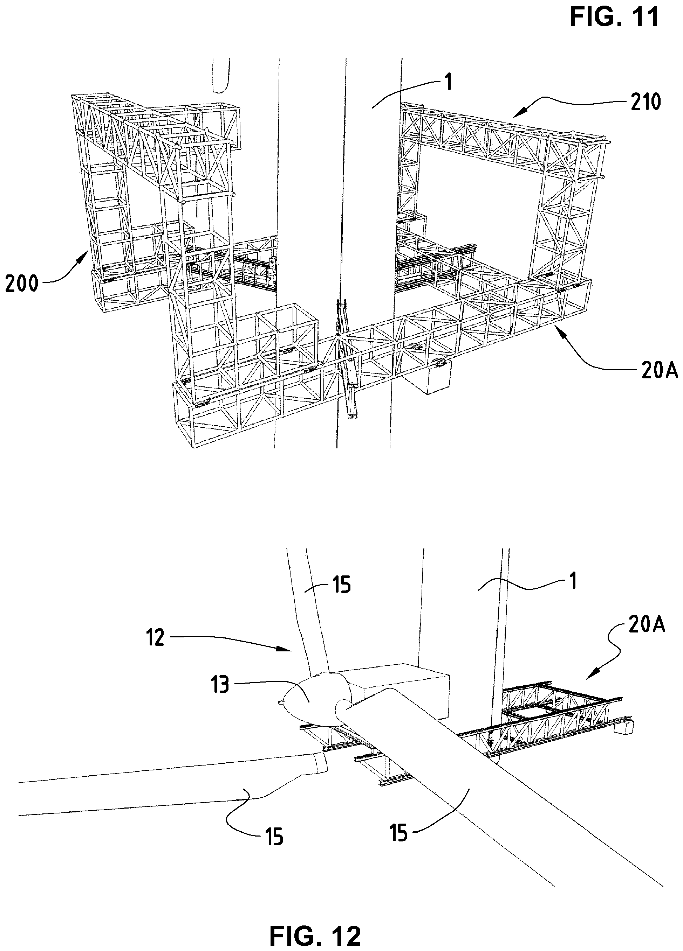

As can be seen in Figure 11, the platform element 20A is then lowered to the base region of the tower 1 in a way similar to the lowering of the platform element 20A according to the first embodiment of the present invention. Support arms 220 are continuously retracted while lowering the platform element 20A.

The platform element 20A of the assembly 20 according to this second embodiment of the present invention can of course also comprise movable counterweights which can be used for maintaining the centre of gravity on substantially the same or a predetermined position during the lifting and/or lowering process.

A third embodiment of the assembly and method according to the present invention is represented in Figures 12 to 15.

Basically, this third embodiment of the platform element 20A is quite similar to the platform element 20A in the first and second embodiment described above. In particular, this third embodiment also relies on the bracket assembly 2 represented in Figure 1. Also, as can be seen in Figure 12, the assembly 20 according to the second embodiment of the invention is also based on a platform element 20A which has the form of a frame, similar to the platform element 20A of the assembly 20 according to the first or second embodiments of the present invention.

However, the platform element 20A according to this third embodiment of the invention differs from the first and second embodiment of the invention mainly by the fact that the platform element 20A in Figure 12 does not comprise any C-shaped frame. Following this modification, the lifting method adapted to this platform element 20A is also different from the lifting method adapted to the platform element 20A according to the first and second embodiments of the present invention, as described in the following:
After the platform element 20A has been assembled in the base region of the tower 1, it is connected to lifting cables 9 attached to the load bearing parts 5 of the bracket assembly 2 (cf. Figure 1). Then, two blades 15 and the hub 13 of the rotor 12 are also assembled on the ground and connected to the nacelle 11. This assembly is then lifted (i.e. using a conventional crane) and placed on the top of the platform element 20A, on the shifting element 27. The third blade 15 of the rotor 12 remains supported on the ground in the proximity of the base of the tower 1.

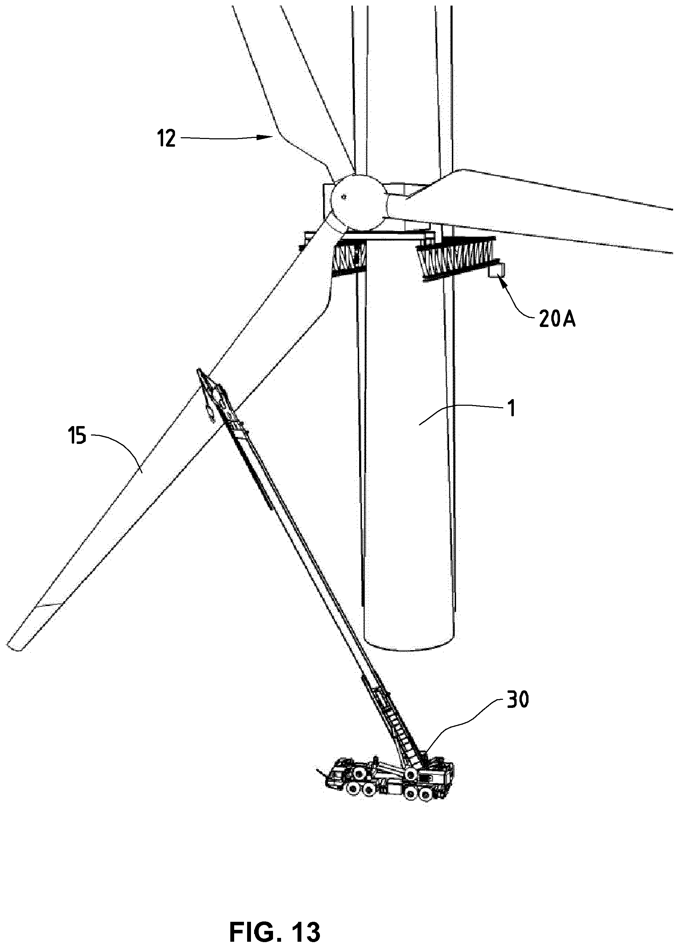

In the next step, the platform element 20A (with the nacelle 11 and the two-bladed rotor 12 thereon) is lifted using lifting cables 9. After a certain height has been achieved, the lifting is stopped and a service crane 30 or another appropriate device is used in order to lift the remaining third rotor blade 15 and to connect it to the hub 13 of the rotor 12. Figure 13 represents this step of the lifting method, after the rotor 12 has been fully assembled.

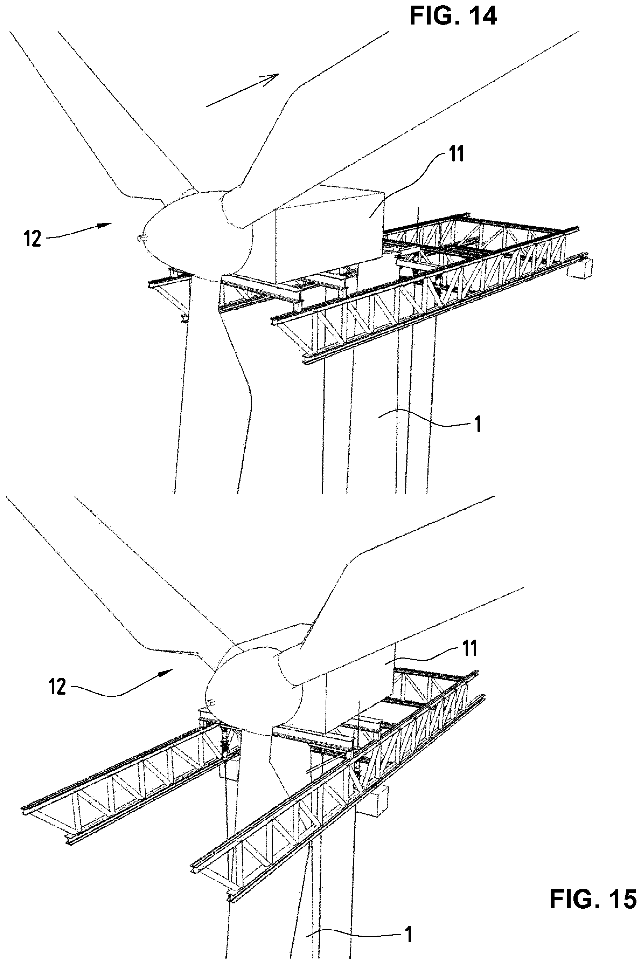

After the platform element 20A has reached the top region of the tower 1, as can be seen in Figure 14, the lifting operation can be stopped for allowing the installing of the nacelle 11 and the rotor 12 in their final position. Also with the third embodiment of the platform element 20A of the present invention, the bracket assembly 2 can be used for securing and anchoring the platform element 20A in this position, but other methods can be equally used. Then, the shifting element 27 with the assembly nacelle-rotor can be rolled or slid towards the tower 1 (as represented by the arrow in Figure 14) until the nacelle 11 and the rotor 12 reach their final position, represented in Figure 15. Adjustment jacks 29 can be used for fine-tuning in order to achieve the correct position of the nacelle 11 and/or of the rotor 12.

The lowering of the platform element 20A after the rotor 12 and the nacelle 11 have been placed in their final position is equivalent to the lowering of the lifting device according to the first and second embodiments of the present invention.

It is to be mentioned that the platform element 20A according to this third embodiment of the present invention also can comprise movable counterweights, which can be used for maintaining the centre of gravity on substantially same or a predetermined position during the whole lifting process.

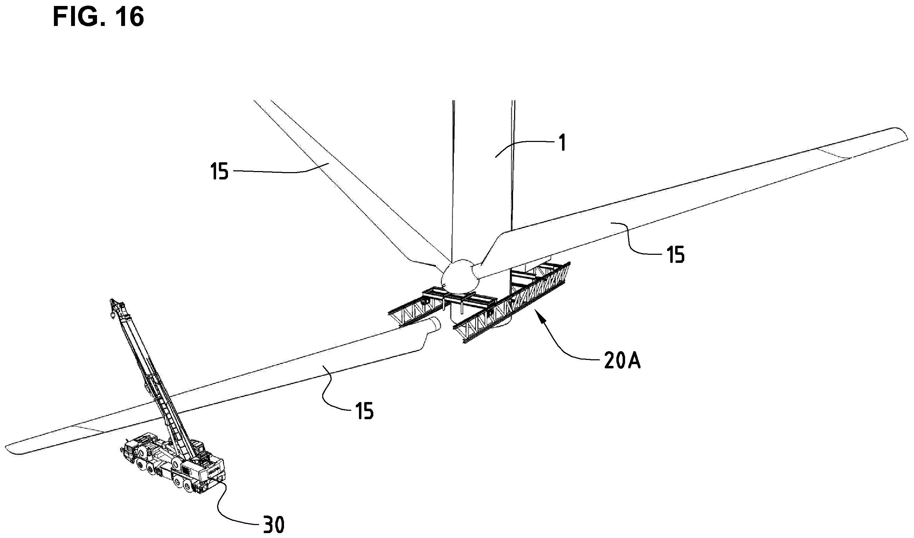

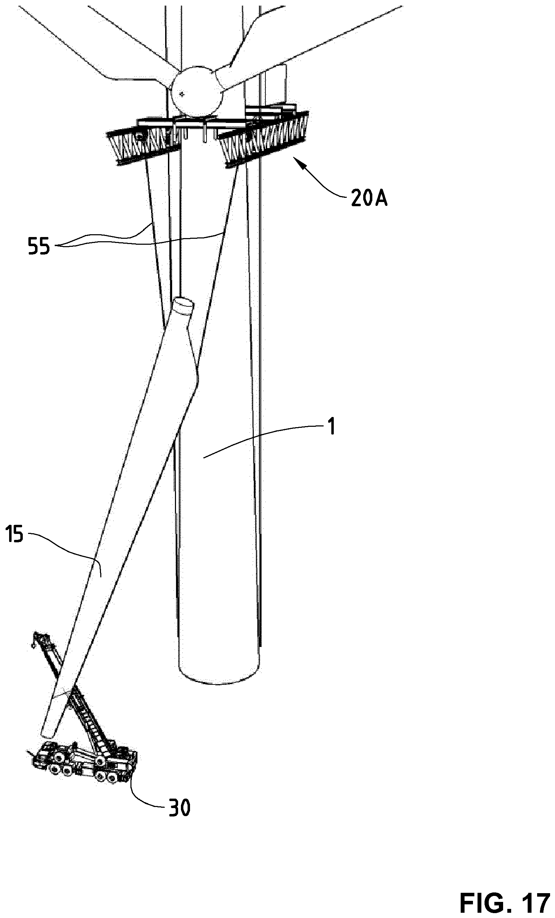

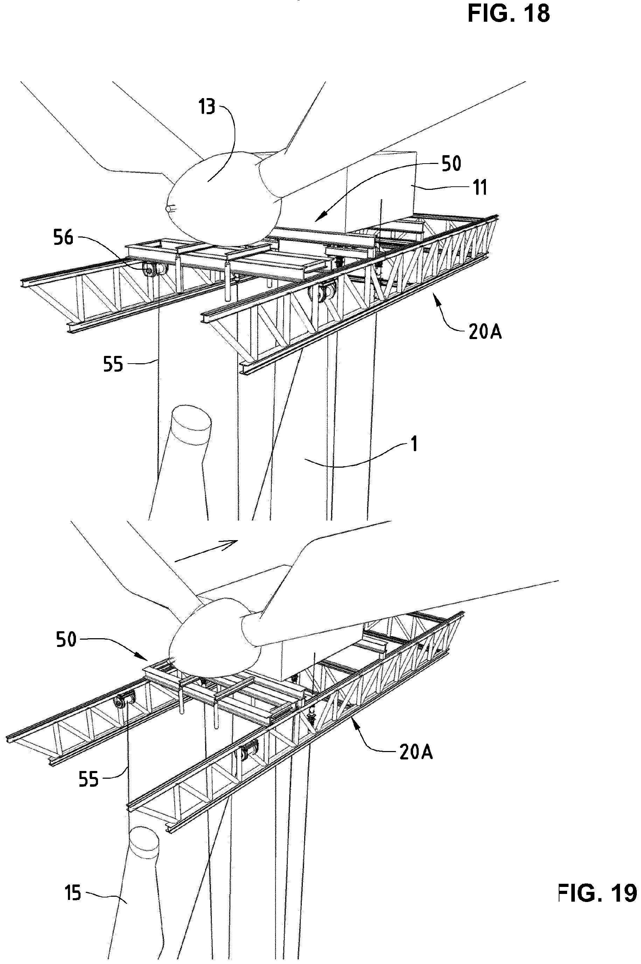

Figures 16 to 20 illustrate an assembly 20 and a method according to a fourth embodiment of the present invention. Again, this fourth embodiment of the present invention uses a platform element 20A which is quite similar to the platform elements 20A of the first, second and third embodiments of the present invention. In particular, this fourth embodiment of the present invention also relies on the bracket assembly 2 represented in Figure 1, and the corresponding platform element 20A also generally has the form of a frame, identical to the platform element 20A according to the first, second and third embodiments of the present invention. Also, the structure of the platform element 20A is in general similar to the structure of the platform element 20A of the first embodiment with the difference that it comprises a support frame 50 (nicely visible in Figures 18 to 20), similar to the shifting element 27, instead of the C-shaped frame 23.

The method of lifting the nacelle 11 and the rotor 12 to the top region of the tower 1 using the platform element 20A of this fourth embodiment of the present invention comprises the following steps:
As can be seen in Figure 16, when the platform element 20A has been assembled in the base region of the tower 1, it is connected to lifting cables 9 attached to the load bearing parts 5 of the bracket assembly 2. Then, two blades 15 and the hub 13 of the rotor 12 are also assembled on the ground and placed on the support frame 50. The nacelle 11 is placed on the shifting element 27 (as in the case when the platform element 20A of the first embodiment is utilized). Then, the remaining third blade 15 is connected to the platform element 20A by means of any appropriate means, for example by means of cables 55, which are connected to reels, or any other appropriate lifting apparatus 56 attached to the support frame 50 (cf. Figure 13).

The platform element 20A is then lifted in the way described in connection with the first embodiment of the present invention. During the lifting operation of the platform element 20A, however, the rotor 12 needs to be rotated from a flat position (i.e. substantially parallel to the ground) to an upright position. With this in mind, the method according to the fourth embodiment of the present invention works in a way generally similar to the method of the second embodiment described above.

In a general case, the blade 15 will be suspended on cables 55 such that the blade 15 will automatically be urged to adopt the upright position under the influence of gravity. However, a service crane 30 or a similar device can also be used to assist with the adjustment of the orientation of the blade 15. The position adjustment is completed after the blade 15 has reached the full upright position (i.e. perpendicular to the ground).

When the platform element 20A has reached the top region of the tower 1, as represented in Figure 18, the lifting operation is stopped for allowing the installing of the nacelle 11 and the rotor 12 in their final position. The platform element 20A can be anchored against the bracket assembly 2, if necessary. Then, the nacelle 11 is slid or rolled towards the tower 1 using the shifting element 27 until it has reached the final position. Adjustment jacks can be used to achieve a fully correct position. Then, the nacelle 11 is transferred from the shifting element 27 to the top of the tower 1.

In the next step, the shifting element connected to the support frame 50 for the rotor is also moved towards the tower 1 (as represented by the arrow in Figure 19) until the rotor 12 has reached its final position. Adjustment jacks are used for fine-tuning of the position of the rotor 12 with respect to the nacelle 11 such that the rotor 12 can be easily connected to and mounted on the nacelle 11.

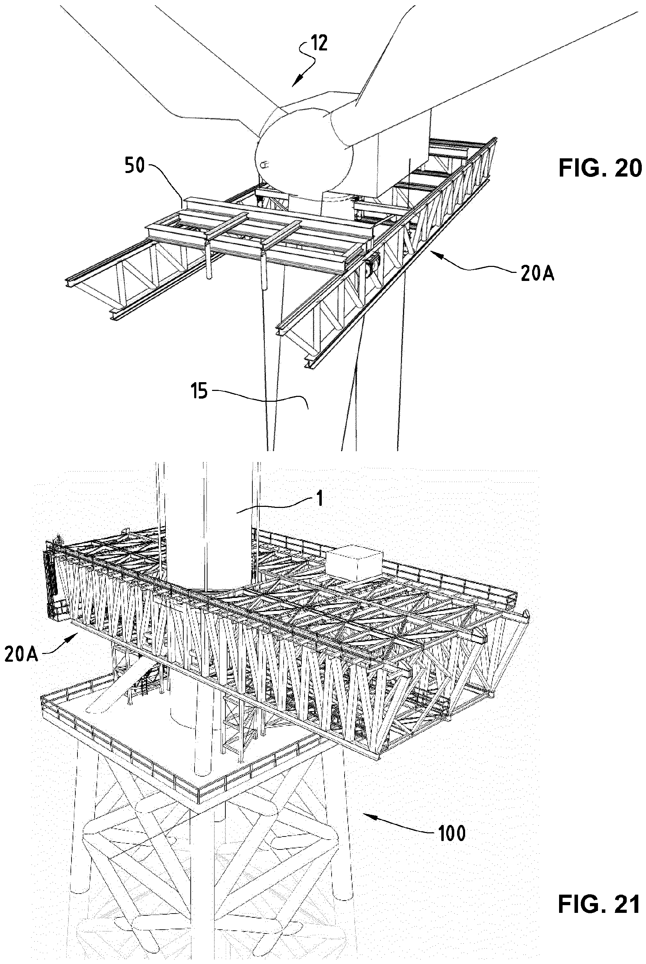

The last assembly step is represented in Figure 20. The lifting apparatus 56 are used in order to lift the third rotor blade 15, suspended from the support frame 50, into position. Tag lines or similar means can be used to fine adjust the position of the blade 15 with respect to the rotor 12. Once the correct position has been reached, the blade 15 is connected to the hub 13.

The lowering of the platform element 20A after the rotor 12 and the nacelle 11 have been placed in their final position is equivalent to the lowering of the platform element 20A according to the first embodiment of the present invention. Also, movable counterweights for maintaining the centre of gravity on the substantially same or a predetermined position during the whole lifting process can also be provided, like in the previous embodiments.

A fifth embodiment of the assembly and method according to the present invention is represented in Figures 21 to 26. This fifth embodiment of the lifting assembly and method according to the present invention is particularly suited for offshore installation and construction of wind turbines. However, they can also be used in connection with any other similar structure.

According to this particular application of the fifth embodiment of the present invention, the tower 1 is not placed on the ground but on a corresponding offshore platform 100 or similar, as illustrated in Figure 21 showing the base region of the wind turbine tower of Figure 1 with a platform element 20A according to the fifth embodiment of the present invention, prior to starting the lifting process. As can be seen in Figure 21, the platform element 20A according to the fifth embodiment of the present invention is rather similar to the platform element 20A in the first four described embodiments of the present invention. However, it would also be imaginable to use a platform element 20A of any one of the previously described embodiments in connection with the assembly 20 of the fifth embodiment and vice versa.

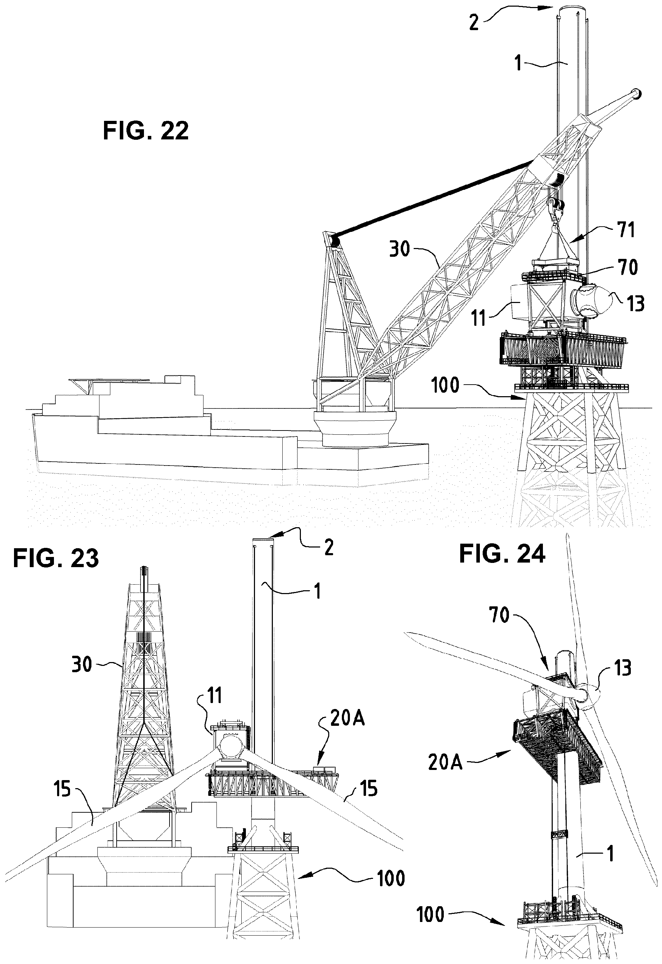

The main particularity of this fifth embodiment of the present invention is the presence of a portal frame 70 which is used for supporting the load elements to be lifted (e.g. the nacelle 11) from above, as can be seen in Figure 22. The movements of this portal frame 70 are transverse rather than longitudinal (relative to hub axis). This portal frame 70 is somehow similar to the portal frame 210 in the second embodiment, but it can also be constructed in a different way.

On the other hand, a bracket assembly 2 similar to the one of Figure 1 is also provided on top of the tower 1 (this bracket assembly 2 is partly visible in Figure 22). This bracket assembly 2 has the same function as bracket assemblies 2 in the previously described embodiments of the present invention, although it can have a slightly different structure.

The lifting method according to this fifth embodiment of the present invention has the following steps:
After the platform element 20A has been put into place on the base region of the tower 1, the nacelle 11 and the hub 13 of the rotor 12 are assembled together and placed together with the supporting portal frame 70 onto the platform element 20A by means of an external conventional crane 30. As represented in Figure 22, this crane can be attached on a floating platform.

Not to be forgotten is the detail that the platform element 20A according to the fifth embodiment of the invention also preferably can comprise movable counterweights which can be used to ensure a substantially constant or predetermined position of the centre of gravity.

In the next step, represented in Figure 23 and Figure 24, the platform element 20A has been lifted together with the nacelle 11 connected to the hub 13 and the portal frame 70 until reaching an intermediate position between the base region of the tower 1 and the top region of the tower 1. In this position, the blades 15 of the rotor 12 are assembled using preferably the external crane 30. Once the rotor 12 has been fully assembled, the lifting process of the platform element 20A can be resumed until the platform element 20A has reached the top region of the tower 1.

During the lifting procedure, the counterweights are adjusted in order to maintain the centre of gravity substantially constant or at a predetermined location. Once at the top of the tower 1, the platform element 20A is again anchored against the bracket assembly 2, if necessary.

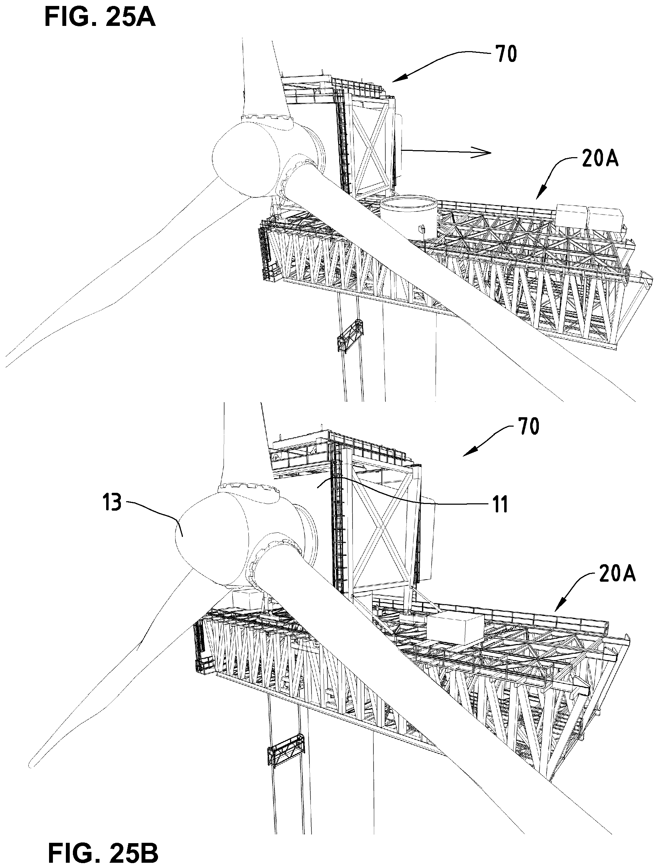

Then, the nacelle 11 and the rotor 12 together with the portal frame 70 are displaced on top of the platform element 20A until reaching the final position above the tower 1. This movement is nicely illustrated in Figures 25A and 25B. Adjustment jacks are then used in order to fine-tune the correct position of the assembly nacelle-rotor which can then be loaded onto the top of the tower 1. The displacement of the load (nacelle 11 and rotor 12) is followed by a corresponding adjustment of counterweights.

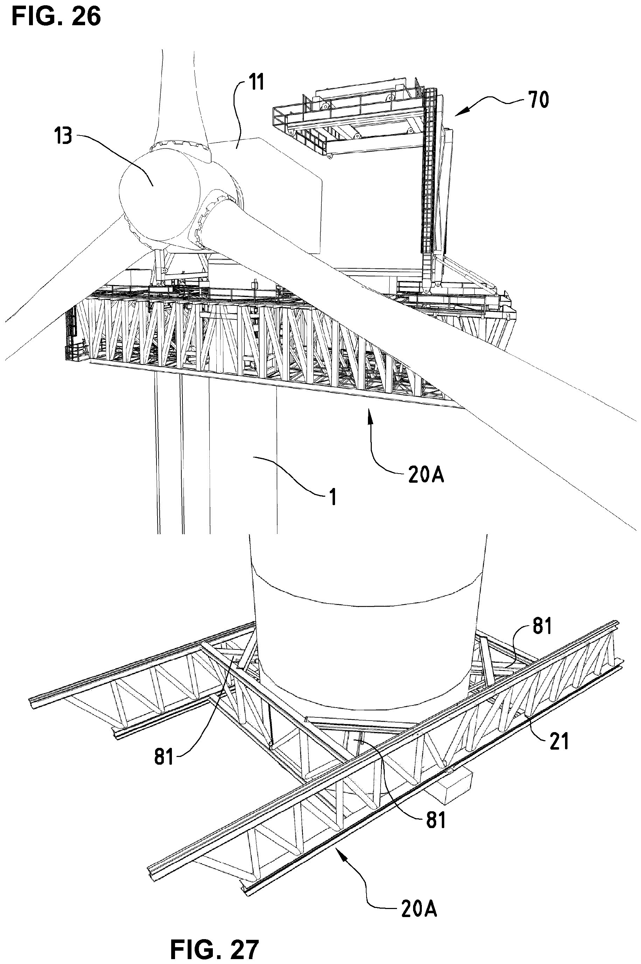

In the next step, illustrated in Figure 26, the shifting element of the nacelle 11 are also moved by sliding or rolling in order to clear the nacelle 11 and the rotor 12. The portal frame 70 is removed, when the platform element 20A is lowered to the base region of the tower 1.

Finally, the present invention also refers to assemblies and methods which can be used in a preferred way for erecting tall structures as such. Sixth and seventh embodiments of the present invention refer to this application of the present invention.

A sixth embodiment of the present invention is represented in Figures 27 to 33.

Figure 27 represents the platform element 20A according to the sixth embodiment of the present invention at the base region of the tower 1. As can be seen in Figure 27, the platform element 20A, comprising a bracket assembly 2 with tower support bracket elements 81 (similar to the bracket elements 3 described in reference with Figure 1) is assembled in the base region of the tower 1. A conventional crane or a similar device can be used for installing this assembly. Since the bracket elements 81 support elevated weights during the load-lifting stage, they must be adequately secured to tower 1. To this end, the connection of the bracket elements 81 to the tower can be assured by means of a pin system or similar. Each one of the bracket elements 81 can be connected to the tower 1 by one or more connection points.

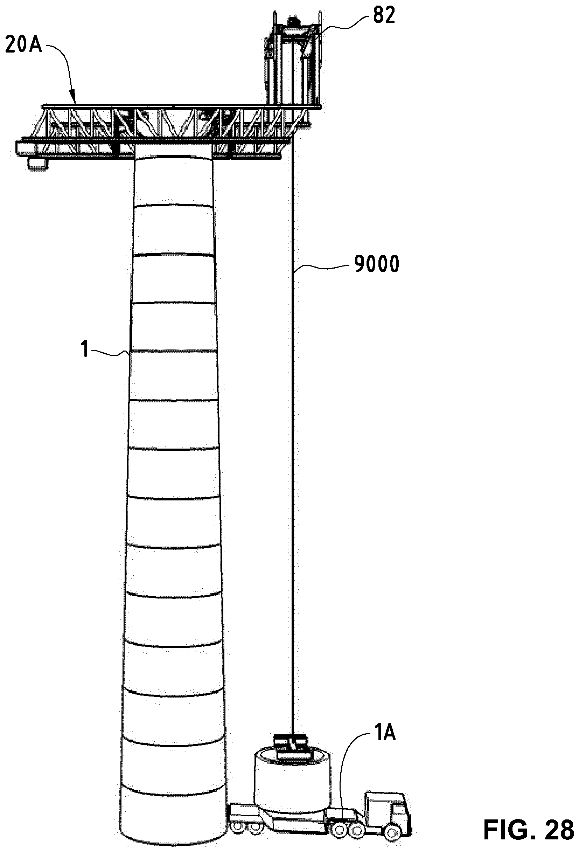

Although no lifting cables are needed in this embodiment of the present invention, such cables hanging vertically from the bracket elements to the base region of the tower 1 can be foreseen. As with previously described embodiments of the present invention, these lifting cables may or may not be connected to the foundation of the tower 1. Then, the portal frame 82 (illustrated in Figure 28) is assembled on the platform element 20A.

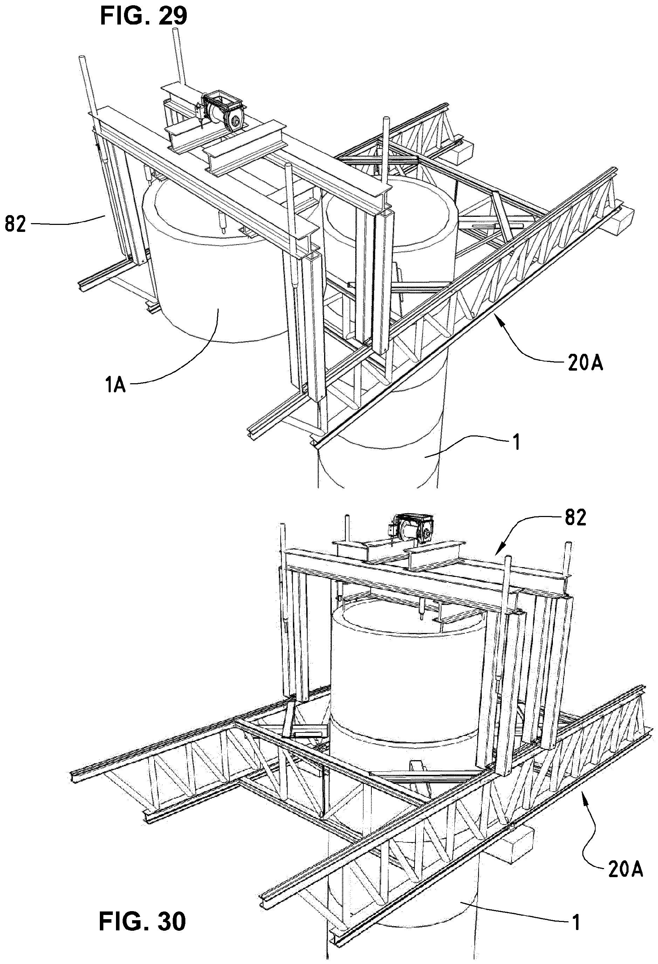

The lifting process and the erection process of the tower 1 go as follows (please note that Figures 28 and 29 represent intermediate stages of this process, not following directly the stage illustrated in Figure 27): A new tower segment 1A is delivered to the base region of the partially completed tower. Using the portal frame 82 and lifting cable 9000 (cf. Figure 28), this new tower segment 1A is lifted and positioned on the platform element 20A. To this end, lifting apparatus 83 (e.g. a winch or similar) is used to pull the lifting cable 9000 with the tower segment 1A. As already mentioned in connection with the other embodiments of the present invention, the platform element 20A may have movable counterweights used for ensuring a substantially stable or a predetermined location of the centre of gravity.

In a way similar to the movement of tower components described in connection with other embodiments of the present invention, the tower segment 1A is then moved by sliding or rolling on a shifting element on the top of the platform element 20A until it is in its final position, above the already assembled part of the tower 1 (as represented in Figure 30). Adjustment jacks or other appropriate means can now be used to reach the correct position of the tower segment 1A. Once more, counterweights on the platform element 20A may need to be adjusted in order to keep the position of the centre of gravity substantially unchanged or at a predetermined position.

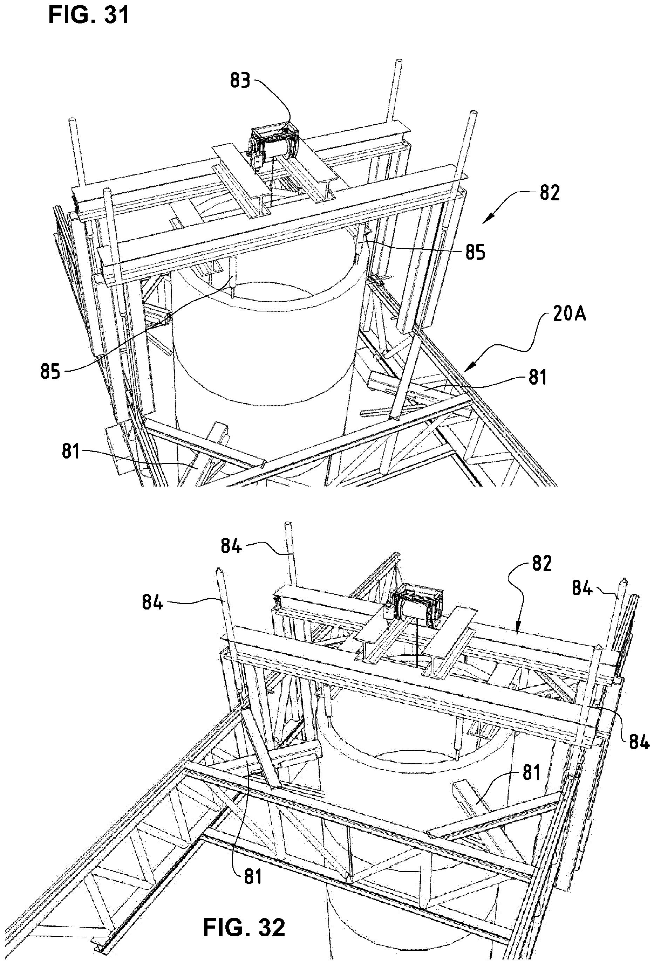

According to the representation in Figure 31, a lifting apparatus 83 (e.g. a winch or similar) is then used for loading the tower segment 1A onto the top of the tower 1. The portal frame 82 can then be disconnected from the tower segment 1A. The portal frame 82 is then linked to the platform element 20A using jacks 84 or any other appropriate means. At the same time, the portal frame 82 is connected to the top of tower 1 via support jacks 85 or any other appropriate means. These support jacks 85 (or similar means) are then used for supporting the whole structure via the top of the tower 1. Then, the tower support bracket elements 81 can be disconnected from the tower 1 (as visible in Figure 31).

Link jacks 84 positioned between the portal frame 82 and the platform element 20A are then used for lifting the platform element 20A including the bracket elements 81, which are not engaged with the tower 1. Once the final position at the top of the assembled part of the tower 1 has been reached, the bracket elements 81 are again secured to the tower 1 as described above. The whole structure can be loaded from the bracket elements 81 (as illustrated in Figure 32). At this time, support jacks 85 (or similar devices) are disconnected.

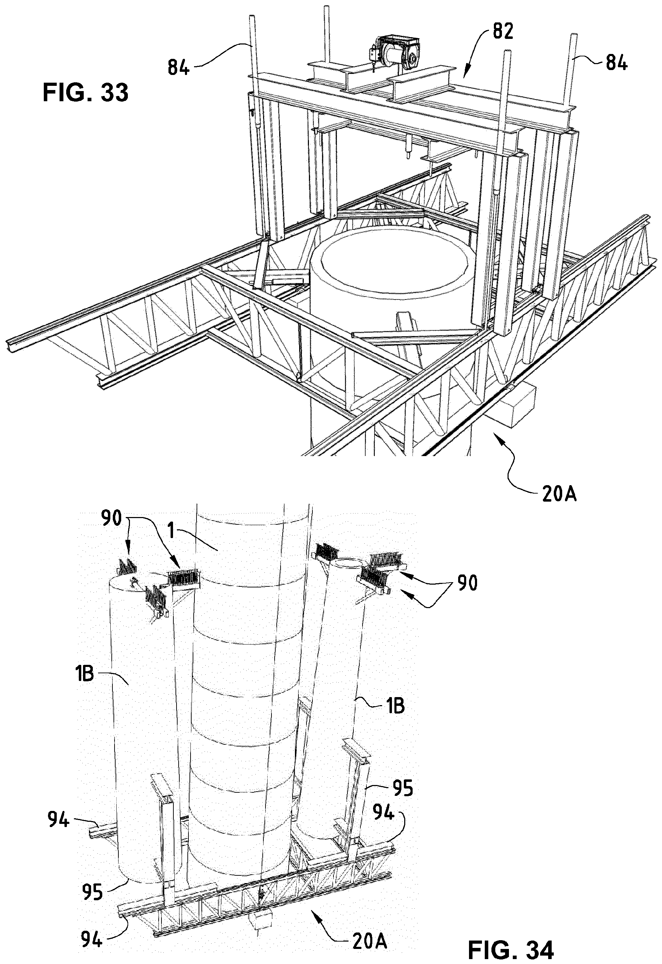

In the next step of the method, the above-mentioned link jacks 84 between the portal frame 82 and the platform element 20A are used in order to lift the portal frame (as illustrated in Figure 33) and to allow its lateral displacement. Then, the method can be carried out further by repeating the steps starting at Figure 28 until all tower segments 1A have been installed and the tower 1 is fully erected.

A seventh embodiment of the present invention is schematically illustrated in Figures 34 to 43.

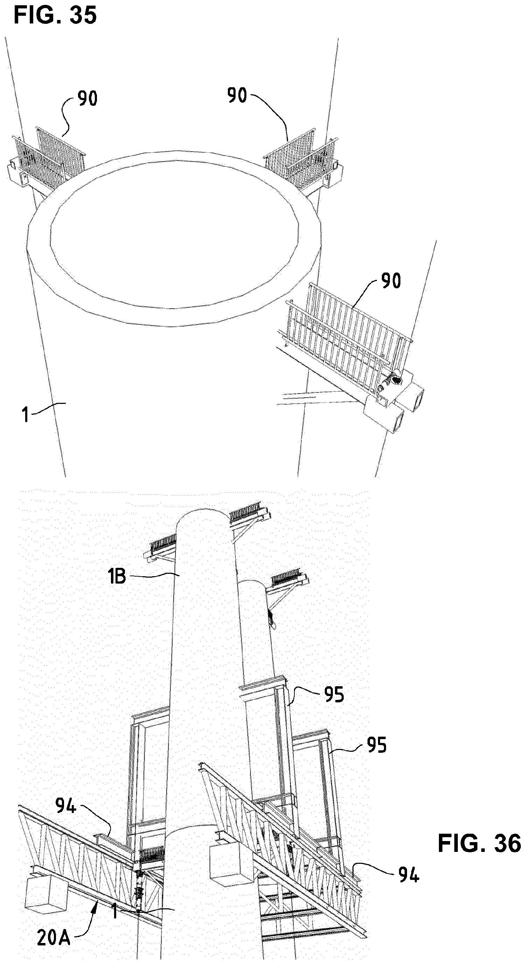

In this seventh embodiment of the present invention, higher tower segments 1B are used for erecting the tower 1. To this end, a bracket assembly similar to the bracket assembly used in connection with the previous embodiments of the present invention is installed on the top of the partially erected tower 1 (cf. Figure 35). The main difference is the form of the bracket elements 90 which in this embodiment also have the form of longitudinal platforms.

The bracket assembly elements 90 can again be self-climbing or installed by any appropriate lifting device (e.g. a conventional crane). The bracket elements 90 are also designed to support elevated weights during the load-lifting process and that is why they are properly secured to tower 1. To this end, the connection of the bracket elements 90 to the tower can be assured by means of a pin system or similar. Each one of the bracket elements 90 can be connected to the tower 1 by two or more connection points. Lifting cables 91, similar to lifting cables 9 of Figure 1, are installed on each one of the bracket elements 90.

In the next step of the method according to this seventh embodiment of the invention as illustrated in Figure 34, the platform element 20A is assembled in the base region of the tower 1 and then connected to the lifting cables 91. Two tower segments 1B are installed on the platform element 20A using any appropriate lifting method. Please note that each one of these tower segments 1B carries on its top a bracket assembly as described above. As can be seen in Figure 34, each one of the tower segments 1B is supported on the platform element 20A by means of a support frame 95. Each one of the two support frames 95 on the top of the platform element 20A is placed on a sledge 94 able to move laterally on the top of the platform element 20A thanks to any appropriate displacement or moving means (e.g. a hydraulic jack or similar).

The platform element 20A with the tower segments 1B is then lifted until reaching the top of the partially erected tower 1 in a way similar to that described in connection with the first embodiment of the present invention. This stage of the method is represented in Figure 36. Once reaching this position, the platform element 20A can preferably be connected in a rigid way with the bracket elements 90 on the top of the tower 1. A first tower segment 1B can then be displaced (e.g. it can slide) laterally and/or vertically on the corresponding sledge 94 on top of the platform element 20A until it has reached its final position. Adjustment jacks are then used in order to achieve the correct position of the tower segment 1B with respect to the already erected part of the tower 1.

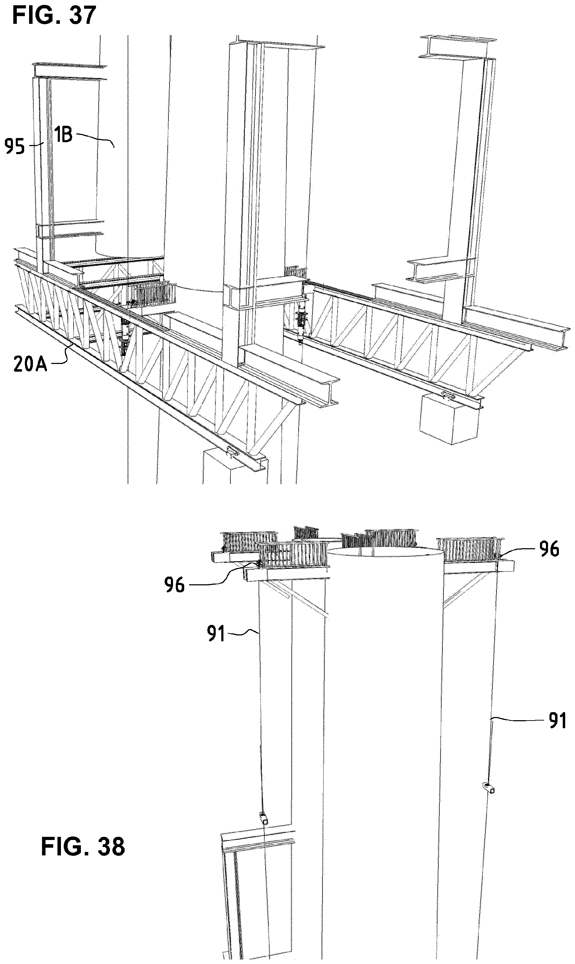

As represented in Figure 37, the tower segment 1B is then loaded onto the top portion of the partially assembled tower 1. Once this first tower segment 1B has been put in place, it can be disconnected from the corresponding support frame 95 such that the free support frame 95 can be moved on the corresponding sledge 94 until reaching its original position on the side of the platform element 20A, where it clears the tower 1.

As in all other embodiments of the present invention, counterweights on the platform element 20A of the lifting device 20 may be used for adjusting the load reparation of the lifting device 20 and thus maintaining a substantially stable or a predetermined centre of gravity.

In the next step of the method, as illustrated in Figure 38, the platform element 20A is then connected with the bracket assembly on the top of the newly constructed part of the tower 1. A lifting apparatus (e.g. a winch) 96 is used to pull up lifting cables 91 to the top of the tower 1 (corresponding to the top of the newly installed tower segment 1B).

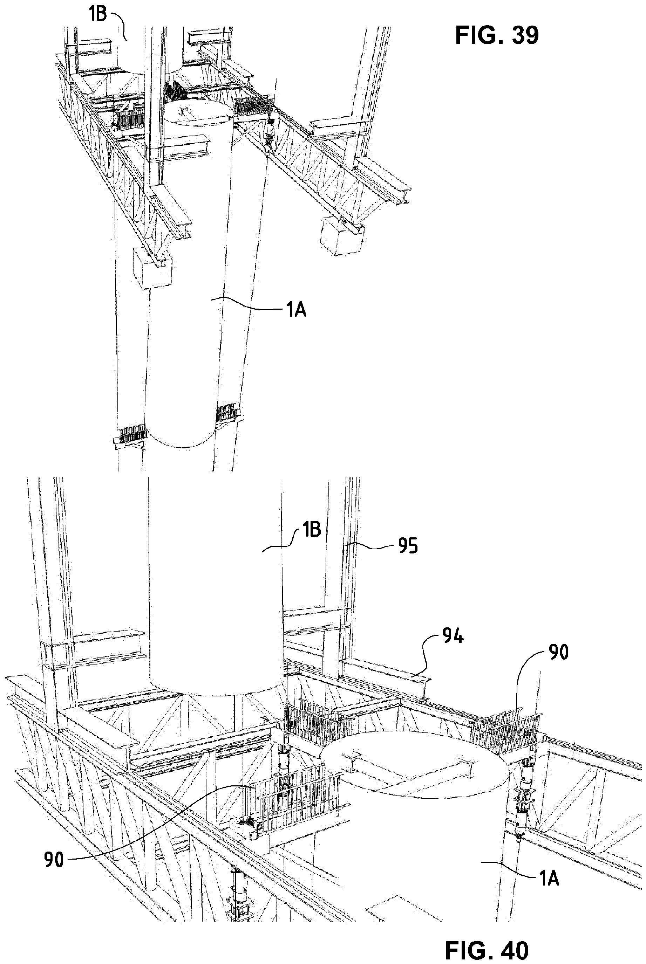

Figures 39 and 40 show the next steps in the method according to this embodiment of the present invention.

More specifically, Figures 39 and 40 illustrate the use of lifting cables 91 which are now anchored on the top of the tower 1 for lifting the platform element together with the remaining tower section 1B to the installation level on the top of the tower 1. Once this level is reached, the platform element may preferably be connected rigidly with the corresponding bracket assembly.

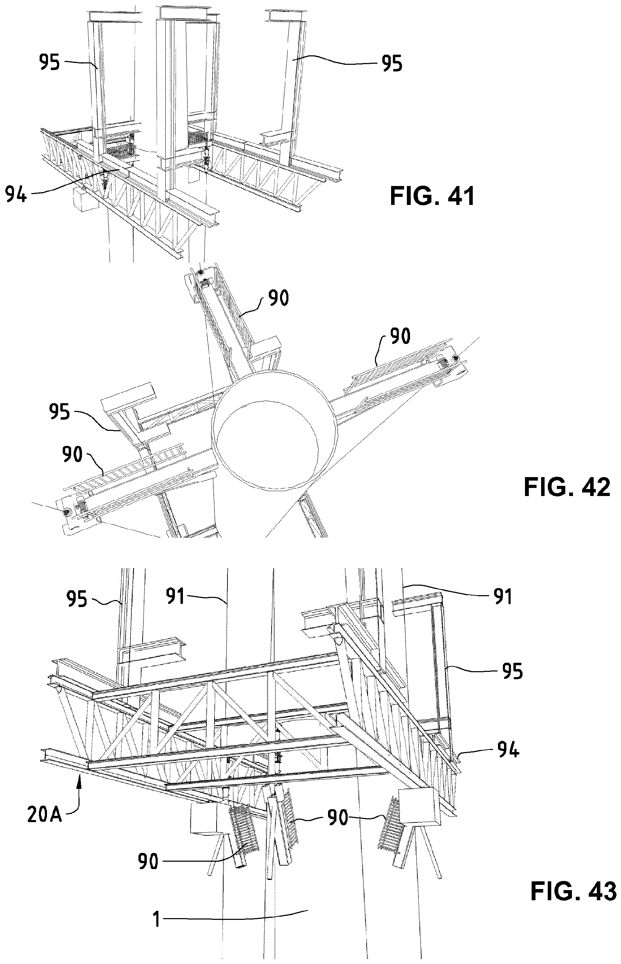

Once the platform element 20A has been fixed at the installation level, the remaining tower segment 1B is displaced on the corresponding sledge 94 on the top of platform element 20A until reaching its final position and then loaded onto the top of the tower 1 as represented in Figure 41. These steps of the method correspond to the way in which the first tower segment 1B is displaced and loaded on the top of the tower 1. Adjustment jacks are again used in order to fine-tune the position of the tower segments 1B. The displacement of the segment 1B can be compensated by the adjustment of the counterweights on platform element 20A for keeping the centre of gravity at a substantially constant or predetermined position. A lifting apparatus (e.g. a winch) 96 is used to pull up lifting cables 91 to the top of the tower 1 (corresponding to the newly installed tower segment 1B)

The last steps of the method according to seventh embodiment of the present invention are represented in Figures 42 and 43. More specifically, lifting cables which are anchored on the top of the tower 1 are used in order to lift the platform element 20A slightly such that the first set of bracket elements supporting the platform element 20A can be disconnected and hung from the platform element 20A. Then, the platform element is lowered on the lifting cables until also the second set of bracket elements can be hung from the platform. Finally, the platform element 20A can be lowered to the ground in the usual way.

It is to be noted that the implementation described is given by way of example only, and the method and apparatus could be implemented in other ways. For example, the technique is described in detail with respect to lifting wind turbine components to the top of a tower, but the method according to an embodiment of the present invention could be used for lifting any large load(s) to an elevated region on any tall structure. The tower may typically be a reinforced concrete structure, or may also be constructed of other materials such as metal or a composite material. Also, the tower 1 does not necessarily need to be made up of elements with a circular shape. Instead, segments 1A and 1B of any other profile can be used, in particular oval or rectangular towers. Furthermore, open and truss-type structures and/or segments would also be possible.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. An assembly (20) for lifting a load element (11, 12, 1A, 1B, 15) from a base region of a construction (1), in particular a tower of a wind turbine, to another region of the construction (1) and/or for lowering the load element (11, 12, 1A, 1B, 15) from said other region of the construction (1) to the base region of the construction (1), the assembly comprising:
- a platform element (20A) for supporting the load element (11, 12, 1A, 1B, 15);
- lifting means for lifting the platform element (20A) from the base region of the construction (1) to said other region of the construction (1) and/or for lowering the platform element (20A) from said other region of the construction (1) to the base region of the construction (1); and
- a shifting element (27) arranged to be able to change its position with respect to the platform element (20A) in order to move the load element (11, 12, 1A, 1B, 15) in said other region of the construction (1) from a load lifting position on the platform element (20A) to a load installation position on the construction (1),
the lifting means being supported by an anchoring assembly (2) able to be secured in the top region of the construction (1) and, in the load installation position, the platform element (20A) being disposed at least partly below the top of the construction (1),
**characterized in that** the shifting element on the platform element (20A) is a C-shaped frame supported on the platform element (20A), wherein
the shifting element (27) and the C-shaped frame (23) are mounted on top of the platform element (20A), and wherein the C-shaped frame (23) is composed of two substantially vertical beams (25) which are connected by a substantially horizontal beam (24),
configured in such a way that the load element is capable of being rotated from a flat position to an upright position.

2. The assembly according to claim 1, **characterised in that** the anchoring assembly (2) is foreseen for mechanically securing the platform element (20A) at the load installation position.

3. The assembly according to claim 2, **characterised in that** the anchoring assembly (2) comprises a load bearing part (5) extending from the surface of the construction (1).

4. The assembly according to any one of the claims 1 to 3, **characterised in that** the lifting means for lifting the platform element (20A) from the base region of the construction (1) to the top region of the construction (1) comprise lifting cables (9) secured to the anchoring assembly (2).

5. The assembly according to claim 4, **characterised in that** the lifting means for lifting the platform element (20A) from the base region of the construction (1) to the top region of the construction (1) comprise at least one lifting apparatus connected to the lifting cables (9).

6. The assembly according to any one of the claims 1 to 5, **characterised in that** the shifting element on the platform element (20A) is a sledge (27) supported on the platform element (20A).

7. The assembly according to any one of the claims 1 to 6, **characterised in that** the platform element (20A) comprises at least one displaceable counterweight which can be used for maintaining the centre of gravity of the platform element (20A) at a substantially constant or predetermined position.

8. The assembly according to any one of the claims 1 to 7, **characterised in that** the platform element (20A) comprises means for supporting and/or attaching the load element (11, 12, 1A, 1B, 15) during the lifting process.

9. The assembly according to any one of the claims 1 to 8, **characterised in that** the platform element (20A) comprises at least one adjustment jack for fine-tuning of the position of the load element (11, 12, 1A, 1B, 15).

10. A method for lifting a load element (11, 12, 1A, 1B, 15) from a base region of a construction (1), in particular a tower of a tower turbine, to another region of the construction (1), comprising the following steps:
- providing an anchoring assembly (2) at the top region of the construction (1);
- assembling a platform element (20A) for supporting the load element (11, 12, 1A, 1B, 15) at the base region of the construction (1) and engaging the platform element (20A) with the lifting cables (9);
- providing the load element (11, 12, 1A, 1B, 15) to be lifted at the base region of the construction (1);
- loading the load element (11, 12, 1A, 1B, 15) on the platform element (20A) and lifting the platform element (20A) with the load element (11, 12, 1A, 1B, 15) to the load lifting position at said other region of the construction (1) or lifting the platform element (20A) without the load element (11, 12, 1A, 1B, 15) and loading the load element (11, 12, 1A, 1B, 15) on the platform element (20A) after the platform element (20A) has reached the load lifting position at said other region of the construction (1);
- moving the load element (11, 12, 1A, 1B, 15) by means of a shifting element (27) on the platform element (20A), wherein the platform element (20A) is disposed at least partly below the top of the construction (1), the shifting element (27) on the platform element (20A) is a C-shaped frame (23) supported on the platform element (20A), wherein the shifting element (27) and the C-shaped frame (23) are mounted on top of the platform element (20A) and that the C-shaped frame (23) is composed of two substantially vertical beams (25) which are connected by a substantially horizontal beam (24);
- rotating the load element from a flat position to an upright position;
- loading the load element (11, 12, 1A, 1B, 15) on its position on the construction (1); and
- lowering the platform element (20A) to the base region of the construction (1).

11. The method according to claim 10, **characterised in that** the step of moving the load element (11, 12, 1A, 1B, 15) is carried out after the platform element (20A) has reached said other region of the construction (1).

12. The method according to claim 10 or 11, **characterised in that** the step of moving the load element (11, 12, 1A, 1B, 15) is carried out during the lifting of the platform element (20A).

13. The method according to any one of the claims 10 to 12, **characterised in that** the platform element (20A) is mechanically secured in the load installation position by means of anchoring assembly (2).

14. The method according to any one of the claims 10 to 13, **characterised in that** the position of the load element (11, 12, 1A, 1B, 15) prior to the step of loading on its position is adjusted by means of at least one adjustment jack.

15. The method according to any one of the claims 10 to 14, **characterised in that** during the lifting of the platform element (20A) with the load element (11, 12, 1A, 1B, 15) to the load lifting position at said other region of the construction (1) and/or during the moving of the load element (11, 12, 1A, 1B, 15) from a load lifting position to a load installation position and/or during the loading of the load element (11, 12, 1A, 1B, 15) on its position on the construction (1), the centre of gravity of the platform element (20A) is kept at a substantially constant or predetermined position by means of displaceable counterweights.

16. The method according to any one of the claims 11 to 15, **characterised in that** during the lifting of the platform element (20A) with the load element (11, 12, 1A, 1B, 15) to the load lifting position at said other region of the construction (1) and/or during the moving of the load element (11, 12, 1A, 1B, 15) from a load lifting position to a load installation position and/or during the loading of the load element (11, 12, 1A, 1B, 15) on its position on the construction (1), the centre of gravity of the platform element (20A) is kept at a substantially constant or predetermined position by means a tie down or by offsetting the shifting element (27) .

## Patentansprüche

1. Anordnung (20) zum Heben eines Lastelements (11, 12, 1A, 1B, 15) von einem Sockelbereich einer Konstruktion (1), insbesondere einem Mast für eine Windturbine, zu einem anderen Bereich der Konstruktion (1) und/oder zum Absenken des Lastelements (11, 12, 1A, 1B, 15) von dem anderen Bereich der Konstruktion (1) zu dem Sockelbereich der Konstruktion (1), die Anordnung umfasst:
- Ein Plattformelement (20A) zum Tragen des Lastelements (11, 12, 1A, 1B, 15);
- Hebemittel zum Heben des Plattformelements (20A) von dem Sockelbereich der Konstruktion (1) zu dem anderen Bereich der Konstruktion (1) und/oder zum Absenken des Plattformelements (20A) von dem anderen Bereich der Konstruktion (1) zu dem Sockelbereich der Konstruktion (1); und
- ein Verlagerungselement (27), eingerichtet, um seine Position in Bezug auf das Plattformelement (20A) ändern zu können, um das Lastelement (11, 12, 1A, 1B, 15) in dem anderen Bereich der Konstruktion (1) von einer Lasthebeposition auf dem Plattformelement (20A) in eine Lasteinbauposition an der Konstruktion (1) zu bewegen,
wobei die Hebemittel von einer Verankerungsanordnung (2) getragen sind, welche an dem Spitzenbereich der Konstruktion (1) gesichert werden kann, und wobei in der Lasteinbauposition das Plattformelement (20A) zumindest teilweise unterhalb der Spitze der Konstruktion (1) angeordnet ist,
**dadurch gekennzeichnet, dass** das Verlagerungselement auf dem Plattformelement (20A) ein C-förmiger Rahmen ist, welcher auf dem Plattformelement (20A) gelagert ist, wobei
das Verlagerungselement (27) und der C-förmige Rahmen (23) zuoberst auf dem Plattformelement (20A) befestigt sind, und wobei der C-förmige Rahmen (23) sich aus zwei im Wesentlichen vertikalen Trägern (25) zusammensetzt, welche durch einen im Wesentlichen horizontalen Träger (24) verbunden sind,
ausgestaltet derart, dass das Lastelement aus einer flachen Position in eine aufgerichtete Position gedreht werden kann.

2. Anordnung nach Anspruch 1, **dadurch gekennzeichnet, dass** die Verankerungsanordnung (2) vorgesehen ist, um das Plattformelement (20A) in der Lasteinbauposition mechanisch zu sichern.

3. Anordnung nach Anspruch 2, **dadurch gekennzeichnet, dass** die Verankerungsanordnung (2) ein Lastlagerteil (5) umfasst, welches sich von der Fläche der Konstruktion (1) erstreckt.

4. Anordnung nach einem der Ansprüche 1 bis 3, **dadurch gekennzeichnet, dass** die Hebemittel zum Heben des Plattformelements (20A) von dem Sockelbereich der Konstruktion (1) zu dem Spitzenbereich der Konstruktion (1) Hubseile (9) umfasst, welche an der Verankerungsanordnung (2) gesichert sind.

5. Anordnung nach Anspruch 4, **dadurch gekennzeichnet, dass** die Hebemittel zum Heben des Plattformelements (20A) vom Sockelbereich der Konstruktion (1) zu dem Spitzenbereich der Konstruktion (1) zumindest eine Hebevorrichtung umfasst, welche mit den Hubseilen (9) verbunden ist.

6. Anordnung nach einem der Ansprüche 1 bis 5, **dadurch gekennzeichnet, dass** das Verlagerungselement auf dem Plattformelement (20A) ein Schlitten (27) ist, welcher an dem Plattformelement (20A) gelagert ist.

7. Anordnung nach einem der Ansprüche 1 bis 6, **dadurch gekennzeichnet, dass** das Plattformelement (20A) zumindest ein verschiebbares Gegengewicht umfasst, welches verwendet werden kann, um den Schwerpunkt des Plattformelements (20A) an einer im Wesentlichen konstanten oder vorbestimmten Position zu halten.

8. Anordnung nach einem der Ansprüche 1 bis 7, **dadurch gekennzeichnet, dass** das Plattformelement (20A) Mittel umfasst, um das Lastelement (11, 12, 1A, 1B, 15) während des Hebevorgangs zu tragen und/oder zu befestigen.

9. Anordnung nach einem der Ansprüche 1 bis 8, **dadurch gekennzeichnet, dass** das Plattformelement (20A) zumindest eine Einstellbuchse zum Feineinstellen der Position des Lastelements (11, 12, 1A, 1B, 15) umfasst.

10. Verfahren zum Heben eines Lastelements (11, 12, 1A, 1B, 15) von einem Sockelbereich einer Konstruktion (1), insbesondere einem Mast einer Windturbine, zu einem anderen Bereich der Konstruktion (1), umfassend die folgenden Schritte:
- Bereitstellen einer Verankerungsanordnung (2) an dem Spitzenbereich der Konstruktion (1);
- Zusammenbauen eines Plattformelements (20A), um das Lastelement (11, 12, 1A, 1B, 15) an dem Sockelbereich der Konstruktion (1) zu tragen und Verbinden des Plattformelements (20A) mit den Hubseilen (9);
- Bereitstellen des Lastelements (11, 12, 1A, 1B, 15), welches an dem Sockelbereich der Konstruktion (1) angehoben wird;
- Laden des Lastelements (11, 12, 1A, 1B, 15) auf das Plattformelement (20A) und Anheben des Plattformelements (20A) mit dem Lastelement (11, 12, 1A, 1B, 15) in die Lasthebeposition an dem anderen Bereich der Konstruktion (1) oder Anheben des Plattformelements (20A) ohne Lastelement (11, 12, 1A, 1B, 15) und Laden des Lastelements (11, 12, 1A, 1B, 15) auf das Plattformelement (20A) nachdem das Plattformelement (20A) die Lasthebeposition an dem anderen Bereich der Konstruktion (1) erreicht hat;
- Bewegen des Lastelements (11, 12, 1A, 1B, 15) mittels eines Verlagerungselements (27) auf dem Plattformelement (20A), wobei das Plattformelement (20A) zumindest teilweise unterhalb der Spitze der Konstruktion (1) angeordnet ist,
**dadurch gekennzeichnet, dass**
das Verlagerungselement (27) auf dem Plattformelement (20A) ein C-förmiger Rahmen (23) ist, welcher auf dem Plattformelement (20A) gelagert ist, wobei das Verlagerungselement (27) und der C-förmige Rahmen (23) auf dem Plattformelement (20A) befestigt sind und wobei der C-förmige Rahmen (23) sich aus zwei im Wesentlichen vertikalen Trägern (25) zusammensetzt, welche durch einen im Wesentlichen horizontalen Träger (24) verbunden sind;
- Drehen des Lastelements von einer flachen Position in eine aufgerichtete Position;
- Laden des Lastelements (11, 12, 1A, 1B, 15) an seine Position an der Konstruktion (1); und
- Senken des Plattformelements (20A) zu dem Sockelbereich der Konstruktion (1).

11. Verfahren nach Anspruch 10, **dadurch gekennzeichnet, dass** der Schritt zum Bewegen des Lastelements (11, 12, 1A, 1B, 15) ausgeführt wird, nachdem das Plattformelement (20A) den anderen Bereich der Konstruktion (1) erreicht hat.

12. Verfahren nach Anspruch 10 oder 11, **dadurch gekennzeichnet, dass** der Schritt zum Bewegen des Lastelements (11, 12, 1A, 1B, 15) während dem Heben des Plattformelements (20A) ausgeführt wird.

13. Verfahren nach einem der Ansprüche 10 bis 12, **dadurch gekennzeichnet, dass** das Plattformelement (20A) mechanisch in der Lasteinbauposition mittels der Verankerungsanordnung (2) gesichert ist.

14. Verfahren nach einem der Ansprüche 10 bis 13, **dadurch gekennzeichnet, dass** die Position des Lastelements (11, 12, 1A, 1B, 15) vor dem Schritt des Ladens in seine Position mittels zumindest einer Einstellbuchse eingestellt ist.

15. Verfahren nach einem der Ansprüche 10 bis 14, **dadurch gekennzeichnet, dass** während des Hebens des Plattformelements (20A) mit dem Lastelement (11, 12, 1A, 1B, 15) zu der Lasthebeposition an dem anderen Bereich der Konstruktion (1) und/oder während der Bewegung des Lastelements (11, 12, 1A, 1B, 15) von der Lasthebeposition zu der Lasteinbauposition und/oder während dem Laden des Lastelements (11, 12, 1A, 1B, 15) an seiner Position an der Konstruktion (1), der Schwerpunkt des Plattformelements (20A) an einer im Wesentlichen konstanten oder vorbestimmten Position mittels verschiebbarer Gegengewichte gehalten ist.

16. Verfahren nach einem der Ansprüche 11 bis 15, **dadurch gekennzeichnet, dass** während des Hebens des Plattformelements (20A) mit dem Lastelement (11, 12, 1A, 1B, 15) zu der Lasthebeposition an dem anderen Bereich der Konstruktion (1) und/oder während der Bewegung des Lastelements (11, 12, 1A, 1B, 15) von einer Lasthebeposition zu einer Lasteinbauposition und/oder während dem Laden des Lastelements (11, 12, 1A, 1B, 15) an seine Position an der Konstruktion (1), der Schwerpunkt des Plattformelements (20A) an einer im Wesentlichen konstanten oder vorbestimmten Position mittels Festbinden oder durch Verlagern des Verlagerungselements (27) gehalten ist.

## Revendications

1. Ensemble (20) pour le levage d'une charge (11, 12, 1A, 1B, 15) depuis une zone de base d'une structure (1), en particulier d'une tour d'éolienne, vers une autre zone de la structure (1) et/ou pour l'abaissement de la charge (11, 12, 1A, 1B, 15) depuis ladite autre zone de la structure (1) vers la zone de base de la structure (1), l'ensemble comprenant:
- une plateforme (20A) pour soutenir la charge (11, 12, 1A, 1B, 15);
- des moyens de levage pour soulever la plateforme (20A) depuis la zone de base de la structure (1) vers ladite autre zone de la structure (1) et/ou pour abaisser la plateforme (20A) depuis ladite autre zone de la structure (1) vers la zone de base de la structure (1); et
- un élément coulissant (27) agencé pour être capable de modifier sa position par rapport à la plateforme (20A) afin de déplacer la charge (11, 12, 1A, 1B, 15) dans ladite autre zone de la structure (1) depuis une position de levage de charge sur la plateforme (20A) vers un emplacement de montage de la charge sur la structure (1),
les moyens de levage étant soutenus par un ensemble d'ancrage (2) pouvant être sécurisé au sommet de la structure (1) et, dans l'emplacement de montage de charge, la plateforme (20A) étant disposée au moins en partie sous le sommet de la structure (1),
**caractérisé en ce que** l'élément coulissant (27) sur la plateforme (20A) est un cadre en forme de C maintenu sur la plateforme (20A),
l'élément coulissant (27) et le cadre en forme de C (23) étant montés au sommet de la plateforme (20A) et le cadre en forme de C (23) étant composé de deux poutres substantiellement verticales (25) reliées entre elles par une poutre substantiellement horizontale (24),
configurées de manière à ce que la charge puisse être tournée depuis une position horizontale vers une position verticale.

2. Ensemble selon la revendication 1, **caractérisé en ce que** l'ensemble d'ancrage (2) est prévu pour sécuriser mécaniquement la plateforme (20A) au niveau de l'emplacement de montage de la charge.

3. Ensemble selon la revendication 2, **caractérisé en ce que** l'ensemble d'ancrage (2) comprend une pièce porteuse de charge (5) s'étendant dans le prolongement de la surface de la structure (1).

4. Ensemble selon l'une des revendications 1 à 3, **caractérisé en ce que** les moyens de levage pour soulever la plateforme (20A) depuis la zone de base de la structure (1) vers le sommet de la structure (1) comprennent des câbles de levage (9) sécurisés par l'ensemble d'ancrage (2).

5. Ensemble selon la revendication 4, **caractérisé en ce que** les moyens de levage pour soulever la plateforme (20A) depuis la zone de base de la structure (1) vers le sommet de la structure (1) comprennent au moins un appareil de levage relié aux câbles de levage (9).

6. Ensemble selon l'une des revendications 1 à 5, **caractérisé en ce que** l'élément coulissant de la plateforme (20A) est un traîneau (27) monté sur la plateforme (20A).

7. Ensemble selon l'une des revendications 1 à 6, **caractérisé en ce que** la plateforme (20A) comprend au moins un contrepoids déplaçable qui peut être utilisé pour maintenir le centre de gravité de la plateforme (20A) dans une position substantiellement constante ou prédéterminée.

8. Ensemble selon l'une des revendications 1 à 7, **caractérisé en ce que** la plateforme (20A) comprend des moyens pour supporter et/ou attacher la charge (11, 12, 1A, 1B, 15) pendant le processus de levage.

9. Ensemble selon l'une des revendications 1 à 8, **caractérisé en ce que** la plateforme (20A) comprend au moins un vérin de réglage pour l'ajustement précis de la position de la charge (11, 12, 1A, 1B, 15).

10. Procédé de levage d'une charge (11, 12, 1A, 1B, 15) depuis une zone de base d'une structure (1), en particulier d'une tour d'éolienne, vers une autre zone de la structure (1), comprenant les étapes suivantes:
- fournir un ensemble d'ancrage (2) vers le sommet de la structure (1);
- assembler une plateforme (20A) pour soutenir la charge (11, 12, 1A, 1B, 15) à la zone de base de la structure (1) et engagement de la plateforme (20A) avec les câbles de levage (9);
- fournir la charge (11, 12, 1A, 1B, 15) à soulever au niveau de la zone de base de la structure (1);
- mettre la charge (11, 12, 1A, 1B, 15) sur la plateforme (20A) et soulever la plateforme (20A) avec la charge (11, 12, 1A, 1B, 15) vers la position de levage de la charge au niveau de ladite autre zone de la structure (1), ou soulever la plateforme (20A) sans la charge (11, 12, 1A, 1B, 15) et charger la charge (11, 12, 1A, 1B, 15) sur la plateforme (20A) après que la plateforme (20A) a atteint la position de levage de la charge au niveau de ladite autre zone de la structure (1);
- déplacer la charge (11, 12, 1A, 1B, 15) au moyen d'un élément coulissant (27) sur la plateforme (20A), la plateforme (20A) étant disposée au moins partiellement en-dessous du sommet de la structure (1), **caractérisé en ce que** l'élément coulissant (27) sur la plateforme (20A) est un cadre en forme de C (23) maintenu sur la plateforme (20A), l'élément coulissant (27) et le cadre en forme de C (23) étant montés au sommet de la plateforme (20A), et **en ce que** le cadre en forme de C (23) est composé de deux poutres substantiellement verticales (25) qui sont reliées entre elles par une poutre substantiellement horizontale (24);
- faire tourner la charge depuis une position horizontale vers une position verticale;
- mettre la charge (11, 12, 1A, 1B, 15) en position de chargement sur la structure (1); et
- abaisser la plateforme (20A) vers la zone de base de la structure (1).

11. Procédé selon la revendication 10, **caractérisé en ce que** l'étape de déplacement de la charge (11, 12, 1A, 1B, 15) est effectuée après que la plateforme a atteint ladite autre zone de la structure (1).

12. Procédé selon la revendication 10 ou 11, **caractérisé en ce que** l'étape de déplacement de la charge (11, 12, 1A, 1B, 15) est effectué pendant le levage de la plateforme (20A).

13. Procédé selon l'une des revendications 10 à 12, **caractérisé en ce que** la plateforme (20A) est sécurisée mécaniquement dans l'emplacement de montage de la charge au moyen de l'ensemble d'ancrage (2).

14. Procédé selon l'une des revendications 10 à 13, **caractérisé en ce que** la position de la charge (11, 12, 1A, 1B, 15) avant l'étape de chargement dans sa position est ajustée au moyen d'au moins d'un vérin de réglage.

15. Procédé selon l'une des revendications 10 à 14, **caractérisé en ce que**, durant le levage de la plateforme (20A) avec la charge (11, 12, 1A, 1B, 15) vers la position de levage de charge au niveau de ladite autre zone de la structure (1) et/ou pendant le déplacement de la charge (11, 12, 1A, 1B, 15) depuis une position de levage de charge (11, 12, 1A, 1B, 15) dans sa position sur la structure (1), le centre de gravité de la plateforme (20A) est maintenu dans une position substantiellement constante ou prédéterminée au moyen de contrepoids déplaçables.

16. Procédé selon l'une des revendications 11 à 15, **caractérisé en ce que**, durant le levage de la plateforme (20A) avec la charge (11, 12, 1A, 1B, 15) vers la position de levage de la charge au niveau de ladite autre zone de la structure (1) et/ou pendant le déplacement de la charge (11, 12, 1A, 1B, 15) depuis une position de levage de la charge vers une position d'installation de la charge et/ou pendant le chargement de la charge (11, 12, 1A, 1B, 15) dans sa position sur la structure (1), le centre de gravité de la plateforme (20A) est maintenu dans une position substantiellement constante ou prédéterminée au moyen d'une attache ou en décalant l'élément coulissant (27).
